(19)

**Europäisches Patentamt**
**European Patent Office**
**Office européen des brevets**

(11)  **EP 4 734 016 A1**

(12)  **EUROPEAN PATENT APPLICATION**
published in accordance with Art. 153(4) EPC

(43) Date of publication:
**29.04.2026  Bulletin 2026/18**

(21) Application number: **23946083.5**

(22) Date of filing: **21.07.2023**

(51) International Patent Classification (IPC):
**G06N 20/00** (2019.01)    **H04W 24/02** (2009.01)

(52) Cooperative Patent Classification (CPC):
**G06N 20/00; H04W 24/02**

(86) International application number:
**PCT/CN2023/108655**

(87) International publication number:
**WO 2025/019989 (30.01.2025 Gazette 2025/05)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Huawei Technologies Co., Ltd.
Shenzhen, Guangdong 518129 (CN)**

(72) Inventors:
• **WANG, Jian**
  **Shenzhen, Guangdong 518129 (CN)**
• **LI, Rong**
  **Shenzhen, Guangdong 518129 (CN)**
• **HUANGFU, Yourui**
  **Shenzhen, Guangdong 518129 (CN)**

(74) Representative: **Körber, Martin Hans et al
Mitscherlich PartmbB
Karlstraße 7
80333 München (DE)**

(54)  **COMMUNICATION METHOD AND RELATED DEVICE**

(57)    This application provides a communication method and a related device, so that computational power of a communication node can be used for update of a learning model, and a personalized requirement of a first node for a first submodel in the learning model can be met while enhancing model generalization performance of the first submodel in the learning model. In the method, the first node receives first information, where the first information is used to determine a fused parameter obtained by separately processing the first submodel by using first local data of N second nodes, the first submodel is included in the learning model, and the learning model further includes a second submodel; and the first node sends second information, where the second information indicates a parameter of an updated first submodel, the updated first submodel is obtained by processing the first submodel based on the fused parameter and second local data of the first node, and the parameter of the updated first submodel is used to determine an updated learning model.

FIG. 3

**Description**

<u>**TECHNICAL FIELD**</u>

This application relates to the communication field, and in particular, to a communication method and a related device.

<u>**BACKGROUND**</u>

Wireless communication may be transmission communication performed between two or more communication nodes without propagation via a conductor or a cable. The communication node generally includes a network device and a terminal device.

Currently, in a wireless communication system, a communication node usually has a signal sending and receiving capability and a computing capability. A network device having a computing capability is used as an example. The computing capability of the network device is mainly to provide computational power support for a signal sending and receiving capability (for example, perform computation on a time-domain resource, a frequency-domain resource, or the like for carrying a signal), to implement communication between the network device and another communication node.

However, in a communication network, the computing capability of the communication node may still be sufficient after providing computational power support for the foregoing communication task. Therefore, how to use these computing capabilities is a technical problem to be urgently resolved.

<u>**SUMMARY**</u>

This application provides a communication method and a related device, so that computational power of a communication node can be used for update of a learning model, and a personalized requirement of a first node for a first submodel in the learning model can be met while enhancing model generalization performance of the first submodel in the learning model.

A first aspect of this application provides a communication method. The method is performed by a first node (where the first node may be a communication device), the method is performed by a part of components (for example, a processor, a chip, or a chip system) in the first node, or the method may be implemented by a logical module or software that can implement all or a part of functions of the first node. In the first aspect and possible implementations of the first aspect, an example in which the method is performed by the first node is used for description. In the method, the first node receives first information, where the first information is used to determine a fused parameter obtained by separately processing a first submodel by using first local data of N second nodes, N is a positive integer, the first submodel is included in a learning model, and the learning model further includes a second submodel; and the first node sends second information, where the second information indicates a parameter of an updated first submodel, the updated first submodel is obtained by processing the first submodel based on the fused parameter and second local data of the first node, and the parameter of the updated first submodel is used to determine an updated learning model.

According to the foregoing technical solution, after the first node receives the first information, the first node may determine, based on the first information, the fused parameter obtained by separately processing the first submodel by using the first local data of the N second nodes. Then, the first node may process the first submodel based on the fused parameter and the second local data of the first node, to obtain the updated first submodel. In other words, the first node may update the first submodel in the learning model based on the second local data of the first node and the fused parameter obtained by separately processing the first submodel based on first local data of other nodes (namely, the N second nodes). Therefore, the first local data of the other nodes and the second local data of the first node are used as a basis for updating the first submodel, so that a personalized requirement of the first node for the first submodel in the learning model can be met while enhancing model generalization performance of the first submodel in the learning model.

In addition, in the foregoing technical solution, the first node may further send the second information that indicates the parameter of the updated first submodel, where the parameter of the updated first submodel is used to determine the updated learning model. Therefore, during update of the learning model, the updated learning model determined based on the parameter of the updated first submodel can also enhance model generalization performance and meet a personalized requirement of the node.

It should be understood that, the learning model may be understood as a model used for AI learning and inference in an AI manner, and the learning model may be replaced with an AI model, an AI learning model, a machine learning model, a neural network, an AI network, or the like.

It should be understood that a node participating in update of the learning model may include the first node and the N second nodes. The node participating in the update of the learning model may be a communication node, that is, the first node and the N second nodes each may be a communication node. The communication node includes a network device and/or a terminal device.

Optionally, the node participating in the update of the learning model may further include a node other than the first node and the N second nodes. This is not limited herein.

Optionally, different nodes participating in the update of the learning model may communicate with each other in a plurality of manners. For example, different nodes may be nodes in a decentralized learning model, and a system including the different nodes may be understood as a fully distributed system without a central node. In this case, the different nodes may communicate with neighboring nodes to participate in the update of the learning model. For another example, different nodes may be nodes in a centralized learning model, and a system including the different nodes may be understood as a distributed system with a central node (or referred to as a control node). In this case, the different nodes may communicate with the central node to participate in the update of the learning model.

It should be noted that the learning model may include at least two submodels, for example, the first submodel and the second submodel. Optionally, the learning model may further include a model other than the first submodel and the second submodel. This is not limited herein. The learning model may be used to execute an AI task, and the first submodel and the second submodel may be used to execute subtasks of the AI task. In other words, an AI task executed by the first submodel and an AI task executed by the second submodel may be understood as a part of the AI task executed by the learning model.

For example, the AI task executed by the learning model may be an autonomous driving task. Generally, image recognition is a necessary part required for the autonomous driving task. For example, image recognition tasks such as a human body image recognition task, a license plate image recognition task, and an obstacle image recognition task may be subtasks of the autonomous driving task. Correspondingly, the AI task executed by the first submodel or the AI task executed by the second submodel may be any one of the image recognition tasks.

For another example, the AI task executed by the learning model may be an image classification task (or referred to as an N-class classification task). Generally, the image classification may include image classification between different animals (for example, image classification between cats and dogs), image classification between different plants (for example, image classification between herbs and woody plants), and the like. In other words, an image classification task between different animals, an image classification task between different plants, and the like may be subtasks of the image classification task. Correspondingly, the AI task executed by the first submodel or the AI task executed by the second submodel may be any one of the image classification task between different animals and the image classification task between different plants.

For another example, the AI task executed by the learning model may be a machine translation task. Generally, a word segmentation task, a syntax analysis task, a sentence rewriting task, and the like may be subtasks of the machine translation task. Correspondingly, the AI task executed by the first submodel or the AI task executed by the second submodel may be any one of the word segmentation task, the syntax analysis task, and the sentence rewriting task.

It should be understood that an updated model (including the updated first submodel, an updated second submodel, the updated learning model, and the like) may be understood as a model obtained through update/iteration/improvement on a parameter in the model.

Optionally, the parameter of the updated first submodel indicated by the second information may include a model parameter and/or a gradient parameter.

Optionally, a basis for determining the updated learning model may include only the parameter of the updated first submodel. Alternatively, a basis for determining the updated learning model may include the parameter of the updated first submodel, and may further include a parameter of another updated submodel (for example, an updated second submodel). For example, the AI task executed by the learning model may be an autonomous driving task. When the learning model needs to optimize only a single subtask (for example, the single subtask is a license plate image recognition task), a process of updating the learning model may be understood as updating the first submodel that is in the learning model and that is used to execute the license plate image recognition task. Correspondingly, a basis for determining the updated learning model may include only the parameter of the updated first submodel. When the learning model needs to optimize M (where M is an integer greater than or equal to 2) subtasks, a process of updating the learning model may be understood as updating M submodels (where the M submodels include the first submodel) that are in the learning model and that are used to execute the M subtasks. Correspondingly, a basis for determining the updated learning model may include the parameter of the updated first submodel and a parameter of the another submodel (for example, the second submodel).

Optionally, local information (including local data, a local capability, and/or the like) of the node participating in the update of the learning model may vary. Correspondingly, different nodes may focus on different submodels. In this application, a submodel on which the first node focuses includes the first submodel, and the first submodel may be referred to as a focus submodel, a target submodel, or the like of the first node, and the another submodel (for example, the second submodel) in the learning model may be referred to as a non-focus submodel, another submodel, or the like of the first node. In other words, the focus submodel of the first node includes the first submodel, and the non-focus submodel of the first node includes the second submodel. Correspondingly, a focus submodel of any one of the N second nodes includes the second submodel, and a non-focus submodel of any one of the N second nodes includes the first submodel. For example, the AI task executed by the learning model may be an autonomous driving task. Local data of the first node may include data collected by a parking lot camera. In this case, the submodel on which the first node focuses may be a submodel for executing a license plate image recognition task. Local data of the second node may include data collected by a camera near a sidewalk. In this case, a submodel on which the second node focuses may be a submodel for executing a human body image recognition task.

**In** a possible implementation of the first aspect, the first information includes the fused parameter.

According to the foregoing technical solution, the first information received by the first node may include the fused parameter, so that the first node can directly obtain the fused parameter based on the received first information, and the first node can subsequently determine the updated first submodel based on the fused parameter.

In a possible implementation of the first aspect, the method further includes: The first node receives third information, where the third information indicates a parameter of the updated learning model.

According to the foregoing technical solution, the first node may further receive the third information, and determine the parameter of the updated learning model based on the third information, so that the first node can determine the updated learning model based on the parameter.

Optionally, the first information including the fused parameter and the third information may be from a same node. For example, the same node may be a central node of the first node and the N second nodes. For another example, the same node may be a neighboring node of the first node, and the neighboring node has a capability of performing fusion processing on parameters obtained by separately processing the first submodel by using the first local data of the N second nodes to obtain the fused parameter.

**In** a possible implementation of the first aspect, the first information includes N pieces of sub-information, the N pieces of sub-information are respectively from the N second nodes, and the N pieces of sub-information respectively indicate parameters obtained by processing the first submodel by using the first local data of the N second nodes.

According to the foregoing technical solution, the first information received by the first node may include the N pieces of sub-information respectively from the N second nodes, where the parameters indicated by the N pieces of sub-information may be used to determine the fused parameter, so that the first node can obtain the fused parameter based on the received N pieces of sub-information, and the first node can subsequently determine the updated first submodel based on the fused parameter.

Optionally, the first node may receive N pieces of sub-information through communication with the N second nodes over communication links between the first node and the N second nodes. Alternatively, the first node may receive N pieces of sub-information through communication with K nodes (for example, the K nodes may be one or more of the N second nodes, or the K nodes may be relay nodes between the first node and the N second nodes) over communication links between the first node and the K nodes.

**In** a possible implementation of the first aspect, the method further includes: The first node receives K pieces of fourth information, where the fourth information indicates a parameter of an updated second submodel, K is an integer greater than or equal to 1, and the parameter of the updated second submodel is used to determine the updated learning model.

Optionally, K is equal to N, or K is less than N.

According to the foregoing technical solution, the first node may further receive the K pieces of fourth information, and determine the updated learning model based on the parameter of the updated second submodel indicated by the fourth information and the parameter of the updated first submodel, so that the first node can obtain the updated learning model through local fusion processing.

In a possible implementation of the first aspect, K is an integer greater than 1, and the method further includes: The first node sends fifth information, where the fifth information indicates a fusion result obtained based on the K pieces of fourth information.

According to the foregoing technical solution, when the first node receives more than one piece of fourth information, the first node may perform fusion processing on K parameters of the updated second submodel that are respectively indicated by the K pieces of information, and indicate a fusion result of the fusion processing by using the fifth information, so that a receiver of the fifth information can determine the updated learning model based on the fusion result of the K parameters of the updated second submodel.

In a possible implementation of the first aspect, the method further includes: The first node sends sixth information, where the sixth information indicates a loss and/or a gradient obtained by processing the second submodel by using first local data of the first node.

According to the foregoing technical solution, the first node may further send the sixth information that indicates the loss and/or the gradient obtained by processing the second submodel by using the first local data of the first node, so that a receiver of the sixth information can learn of the loss and/or the gradient, and can subsequently update the second submodel based on the loss and/or the gradient.

In a possible implementation of the first aspect, the method further includes: The first node sends or receives first downlink control information (downlink control information, DCI) and second DCI, where the first DCI indicates a resource for carrying the first information, and the second DCI indicates a resource for carrying the second information; and the first DCI and the second DCI each include a learning phase indication field, and a value of the learning phase indication field in the first DCI is different from a value of the learning phase indication field in the second DCI.

According to the foregoing technical solution, the resource for carrying the first information and the resource for carrying the second information may be scheduled by using different DCI. The first node may serve as a scheduling party of the resource, or the first node may serve as a scheduled party of the resource, so that the first node implements resource scheduling by sending or receiving the first DCI and the second DCI.

In addition, the first DCI and the second DCI each may include the learning phase indication field, and different resources are indicated by using different values of the field.

In a possible implementation of the first aspect, the first local data is query set data, and the second local data is support set data.

According to the foregoing technical solution, the learning model may be a learning model in a meta-learning scenario. Generally, a node in the meta-learning scenario may include support set data used to train a model to be of an intermediate version, and may further include query set data used to calculate a loss based on the intermediate version.

In other words, in the node participating in the update of the learning model, the first local data used to process the model to obtain a loss and/or a gradient may be query set data, and the second local data used to process the model may be support set data.

In a possible implementation of the first aspect, the fused parameter includes a fused gradient and/or a fused loss.

According to the foregoing technical solution, the fused parameter obtained by separately processing the first submodel by using the first local data of the N second nodes may be obtained by fusing gradients and/or losses obtained by separately processing the first submodel by using the first local data of the N second nodes, to enhance a model generalization capability of the updated first submodel that is subsequently obtained based on the fused parameter and a model generalization capability of the updated learning model.

It should be understood that the first information may be used to determine the fused parameter obtained by separately processing the first submodel by using the first local data of the N second nodes. Generally, the fused gradient included in the fused parameter may be a gradient obtained by processing a parameter of a submodel, and the fused loss included in the fused parameter may be a loss (or a loss function) obtained by processing a parameter of a learning model.

Optionally, when the fused parameter includes the fused gradient, for the first node, the first node may locally process the first submodel based on the second local data of the first node to obtain a first submodel of an intermediate version, and the first node may process the first submodel of the intermediate version based on the fused gradient to obtain the updated first submodel. When the fused parameter includes the fused loss, for the first node, after locally processing the learning model based on the fused loss to obtain a learning model of an intermediate version, the first node may process a first submodel in the learning model of the intermediate version based on the second local data of the first node to obtain the updated first submodel.

A second aspect of this application provides a communication method. The method is performed by a second node (where the second node may be a communication device), the method is performed by a part of components (for example, a processor, a chip, or a chip system) in the second node, or the method may be implemented by a logical module or software that can implement all or a part of functions of the second node. In the first aspect and possible implementations of the second aspect, an example in which the method is performed by the second node is used for description. In the method, the second node sends first information, where the first information is used to determine a fused parameter obtained by separately processing a first submodel by using first local data of N second nodes, N is a positive integer, the first submodel is included in a learning model, and the learning model further includes a second submodel; and the second node receives second information, where the second information indicates a parameter of an updated first submodel, the updated first submodel is obtained by updating the first submodel based on the fused parameter and second local data of the first node, and the parameter of the updated first submodel is used to determine an updated learning model.

According to the foregoing technical solution, after the second node sends the first information, the first node may determine, based on the received first information, the fused parameter obtained by separately processing the first submodel by using the first local data of the N second nodes. Then, the first node may process the first submodel based on the fused parameter and the second local data of the first node, to obtain the updated first submodel. In other words, the first node may update the first submodel in the learning model based on the second local data of the first node and the fused parameter obtained by separately processing the first submodel based on first local data of other nodes (namely, the N second nodes). Therefore, the first local data of the other nodes and the second local data of the first node are used as a basis for updating the first submodel, so that a personalized requirement of the first node for the first submodel in the learning model can be met while enhancing model generalization performance of the first submodel in the learning model.

In addition, in the foregoing technical solution, the second node may further receive the second information that indicates the parameter of the updated first submodel, where the parameter of the updated first submodel is used to determine the updated learning model. Therefore, during update of the learning model, the updated learning model determined based on the parameter of the updated first submodel can also enhance model generalization performance and meet a personalized requirement of the node.

It should be understood that, the learning model may be understood as a model used for AI learning and inference in an AI manner, and the learning model may be replaced with an AI model, an AI learning model, a machine learning model, a neural network, an AI network, or the like.

It should be understood that a node participating in update of the learning model may include the first node and the N second nodes. The node participating in the update of the learning model may be a communication node, that is, the first node and the N second nodes each may be a communication node. The communication node includes a network device and/or a terminal device.

Optionally, the node participating in the update of the learning model may further include a node other than the first node and the N second nodes. This is not limited herein.

Optionally, different nodes participating in the update of the learning model may communicate with each other in a plurality of manners. For example, different nodes may be nodes in a decentralized learning model, and a system including the different nodes may be understood as a fully distributed system without a central node. In this case, the different nodes may communicate with neighboring nodes to participate in the update of the learning model. For another example, different nodes may be nodes in a centralized learning model, and a system including the different nodes may be understood as a distributed system with a central node (or referred to as a control node). In this case, the different nodes may communicate with the central node to participate in the update of the learning model.

It should be noted that the learning model may include at least two submodels, for example, the first submodel and the second submodel. Optionally, the learning model may further include a model other than the first submodel and the second submodel. This is not limited herein. The learning model may be used to execute an AI task, and the first submodel and the second submodel may be used to execute subtasks of the AI task. In other words, an AI task executed by the first submodel and an AI task executed by the second submodel may be understood as a part of the AI task executed by the learning model.

For example, the AI task executed by the learning model may be an autonomous driving task. Generally, image recognition is a necessary part required for the autonomous driving task. For example, image recognition tasks such as a human body image recognition task, a license plate image recognition task, and an obstacle image recognition task may be subtasks of the autonomous driving task. Correspondingly, the AI task executed by the first submodel or the AI task executed by the second submodel may be any one of the image recognition tasks.

For another example, the AI task executed by the learning model may be a machine translation task. Generally, a word segmentation task, a syntax analysis task, a sentence rewriting task, and the like may be subtasks of the machine translation task. Correspondingly, the AI task executed by the first submodel or the AI task executed by the second submodel may be any one of the word segmentation task, the syntax analysis task, and the sentence rewriting task.

It should be understood that an updated model (including the updated first submodel, an updated second submodel, the updated learning model, and the like) may be understood as a model obtained through update/iteration/improvement on a parameter in the model.

Optionally, a basis for determining the updated learning model may include only the parameter of the updated first submodel. Alternatively, a basis for determining the updated learning model may include the parameter of the updated first submodel, and may further include a parameter of another updated submodel (for example, an updated second submodel). For example, the AI task executed by the learning model may be an autonomous driving task. When the learning model needs to optimize only a single subtask (for example, the single subtask is a license plate image recognition task), a process of updating the learning model may be understood as updating the first submodel that is in the learning model and that is used to execute the license plate image recognition task. Correspondingly, a basis for determining the updated learning model may include only the parameter of the updated first submodel. When the learning model needs to optimize M (where M is an integer greater than or equal to 2) subtasks, a process of updating the learning model may be understood as updating M submodels (where the M submodels include the first submodel) that are in the learning model and that are used to execute the M subtasks. Correspondingly, a basis for determining the updated learning model may include the parameter of the updated first submodel and a parameter of the another submodel (for example, the second submodel).

Optionally, local information (including local data, a local capability, and/or the like) of the node participating in the update of the learning model may vary. Correspondingly, different nodes may focus on different submodels. In this application, a submodel on which the first node focuses includes the first submodel, and the first submodel may be referred to as a focus submodel, a target submodel, or the like of the first node, and the another submodel (for example, the second submodel) in the learning model may be referred to as a non-focus submodel, another submodel, or the like of the first node. In other words, the focus submodel of the first node includes the first submodel, and the non-focus submodel of the first node includes the second submodel. Correspondingly, a focus submodel of any one of the N second nodes includes the second submodel, and a non-focus submodel of any one of the N second nodes includes the first submodel. For example, the AI task executed by the learning model may be an autonomous driving task. Local data of the first node may include data collected by a parking lot camera. In this case, the submodel on which the first node focuses may be a submodel for executing a license plate image recognition task. Local data of the second node may include data collected by a camera near a sidewalk. In this case, a submodel on which the second node focuses may be a submodel for executing a human body image recognition task.

**In** a possible implementation of the second aspect, the first information includes the fused parameter.

According to the foregoing technical solution, the first information sent by the second node may include the fused parameter, so that the first node can directly obtain the fused parameter based on the received first information, and the first node can subsequently determine the updated first submodel based on the fused parameter.

In a possible implementation of the second aspect, the method further includes: The second node sends third information, where the third information indicates a parameter of the updated learning model.

According to the foregoing technical solution, the second node may further send the third information, so that after receiving the third information, the first node can determine the parameter of the updated learning model based on the third information, and determine the updated learning model based on the parameter.

Optionally, for example, the second node may be a central node of the first node and the N second nodes. For another example, the second node may be a neighboring node of the first node, and the second node has a capability of performing fusion processing on parameters obtained by separately processing the first submodel by using the first local data of the N second nodes to obtain the fused parameter.

**In** a possible implementation of the second aspect, the first information includes one or more of N pieces of sub-information, and the N pieces of sub-information respectively indicate parameters obtained by processing the first submodel by using the first local data of the N second nodes.

According to the foregoing technical solution, the first information sent by the second node may be one or more of the N pieces of sub-information, where the parameters indicated by the N pieces of sub-information may be used to determine the fused parameter, so that after receiving the first information, the first node can obtain the fused parameter based on the received N pieces of sub-information, and the first node can subsequently determine the updated first submodel based on the fused parameter.

In a possible implementation of the second aspect, the method further includes: The second node sends fourth information, where the fourth information indicates a parameter of an updated second submodel, and the parameter of the updated second submodel is used to determine the updated learning model.

According to the foregoing technical solution, the second node may further send fourth information, so that after receiving the fourth information, the first node can determine the updated learning model based on the parameter of the updated second submodel indicated by the fourth information and the parameter of the updated first submodel, and the first node can subsequently obtain the updated learning model through local fusion processing.

In a possible implementation of the second aspect, the method further includes: The second node receives fifth information, where the fifth information indicates a fusion result obtained based on the K pieces of fourth information, and K is an integer greater than 1.

According to the foregoing technical solution, when the first node receives more than one piece of fourth information, the first node may perform fusion processing on K parameters of the updated second submodel that are respectively indicated by the K pieces of information, and indicate a fusion result of the fusion processing by using the fifth information, so that after receiving the fifth information, the second node can determine the updated learning model based on the K fusion results of the updated second submodel.

In a possible implementation of the second aspect, the method further includes: The second node receives sixth information, where the sixth information indicates a loss and/or a gradient obtained by processing the second submodel by using first local data of the first node.

According to the foregoing technical solution, the second node may further receive the sixth information that indicates the loss and/or the gradient obtained by processing the second submodel by using the first local data of the first node, so that the second node can learn of the loss and/or the gradient, and can subsequently update the second submodel based on the loss and/or the gradient.

In a possible implementation of the second aspect, the method further includes: The second node sends or receives first downlink control information DCI and second DCI, where the first DCI indicates a resource for carrying the first information, and the second DCI indicates a resource for carrying the second information; and the first DCI and the second DCI each include a learning phase indication field, and a value of the learning phase indication field in the first DCI is different from a value of the learning phase indication field in the second DCI.

According to the foregoing technical solution, the resource for carrying the first information and the resource for carrying the second information may be scheduled by using different DCI. The second node may serve as a scheduling party of the resource, or the second node may serve as a scheduled party of the resource, so that the first node implements resource scheduling by sending or receiving the first DCI and the second DCI.

In addition, the first DCI and the second DCI each may include the learning phase indication field, and different resources are indicated by using different values of the field.

In a possible implementation of the second aspect, the first local data is query set data, and the second local data is support set data.

According to the foregoing technical solution, the learning model may be a learning model in a meta-learning scenario. Generally, a node in the meta-learning scenario may include support set data used to train a model to be of an intermediate version, and may further include query set data used to calculate a loss based on the intermediate version.

In other words, in the node participating in the update of the learning model, the first local data used to process the model to obtain a loss and/or a gradient may be query set data, and the second local data used to process the model may be support set data.

In a possible implementation of the second aspect, the fused parameter includes a fused gradient and/or a fused loss.

According to the foregoing technical solution, the fused parameter obtained by separately processing the first submodel by using the first local data of the second nodes may be obtained by fusing gradients and/or losses obtained by separately processing the first submodel by using the first local data of the second nodes, to enhance a model generalization capability of the updated first submodel that is subsequently obtained based on the fused parameter and a model generalization capability of the updated learning model.

A third aspect of this application provides a communication apparatus. The apparatus is a first node, or the apparatus is a part of components (for example, a processor, a chip, or a chip system) in a first node, or the apparatus may be a logical module or software that can implement all or a part of functions of a first node. In the third aspect and possible implementations of the third aspect, an example in which the communication apparatus is the first node is used for description. The first node may be a terminal device or a network device.

The apparatus includes a processing unit and a transceiver unit. The transceiver unit is configured to receive first information, where the first information is used to determine a fused parameter obtained by separately processing a first submodel by using first local data of N second nodes, N is a positive integer, the first submodel is included in a learning model, and the learning model further includes a second submodel. The processing unit is configured to determine second information, where the second information indicates a parameter of an updated first submodel, the updated first submodel is obtained by processing the first submodel based on the fused parameter and second local data of the first node, and the parameter of the updated first submodel is used to determine an updated learning model. The transceiver unit is further configured to send the second information.

In a possible implementation of the third aspect, the first information includes the fused parameter.

In a possible implementation of the third aspect, the transceiver unit is further configured to receive third information, where the third information indicates a parameter of the updated learning model.

In a possible implementation of the third aspect, the first information includes N pieces of sub-information, the N pieces of sub-information are respectively from the N second nodes, and the N pieces of sub-information respectively indicate parameters obtained by processing the first submodel by using the first local data of the N second nodes.

In a possible implementation of the third aspect, the transceiver unit is further configured to receive K pieces of fourth information, where the fourth information indicates a parameter of an updated second submodel, K is an integer greater than or equal to 1, and the parameter of the updated second submodel is used to determine the updated learning model.

In a possible implementation of the third aspect, K is an integer greater than 1, and the transceiver unit is further configured to send fifth information, where the fifth information indicates a fusion result obtained based on the K pieces of fourth information.

In a possible implementation of the third aspect, the transceiver unit is further configured to send sixth information, where the sixth information indicates a loss and/or a gradient obtained by processing the second submodel by using first local data of the first node.

In a possible implementation of the third aspect, the transceiver unit is further configured to send or receive first downlink control information DCI and second DCI, where the first DCI indicates a resource for carrying the first information, and the second DCI indicates a resource for carrying the second information; and

the first DCI and the second DCI each include a learning phase indication field, and a value of the learning phase indication field in the first DCI is different from a value of the learning phase indication field in the second DCI.

In a possible implementation of the third aspect, the first local data is query set data, and the second local data is support set data.

In a possible implementation of the third aspect, the fused parameter includes a fused gradient and/or a fused loss.

In a possible implementation of the third aspect, the parameter of the updated first submodel includes a model parameter and/or a gradient parameter.

A fourth aspect of this application provides a communication apparatus. The apparatus is a second node, or the apparatus is a part of components (for example, a processor, a chip, or a chip system) in a second node, or the apparatus may be a logical module or software that can implement all or a part of functions of a second node. In the fourth aspect and possible implementations of the fourth aspect, an example in which the communication apparatus is the second node is used for description. The second node may be a terminal device or a network device.

The apparatus includes a processing unit and a transceiver unit. The processing unit is configured to determine first information, where the first information is used to determine a fused parameter obtained by separately processing a first submodel by using first local data of N second nodes, N is a positive integer, the first submodel is included in a learning model, and the learning model further includes a second submodel. The transceiver unit is configured to send the first information. The transceiver unit is further configured to receive second information, where the second information indicates a parameter of an updated first submodel, the updated first submodel is obtained by processing the first submodel based on the fused parameter and second local data of a first node, and the parameter of the updated first submodel is used to determine an updated learning model.

In a possible implementation of the fourth aspect, the first information includes the fused parameter.

In a possible implementation of the fourth aspect, the transceiver unit is further configured to send third information, where the third information indicates a parameter of the updated learning model.

In a possible implementation of the fourth aspect, the first information includes one or more of N pieces of sub-information, and the N pieces of sub-information respectively indicate parameters obtained by processing the first submodel by using the first local data of the N second nodes.

In a possible implementation of the fourth aspect, the transceiver unit is further configured to send fourth information, where the fourth information indicates a parameter of an updated second submodel, and the parameter of the updated second submodel is used to determine the updated learning model.

In a possible implementation of the fourth aspect, the transceiver unit is further configured to receive fifth information, where the fifth information indicates a fusion result obtained based on the K pieces of fourth information, and K is an integer greater than 1.

In a possible implementation of the fourth aspect, the transceiver unit is further configured to receive sixth information, where the sixth information indicates a loss and/or a gradient obtained by processing the second submodel by using first local data of the first node.

In a possible implementation of the fourth aspect, the transceiver unit is further configured to send or receive first downlink control information DCI and second DCI, where the first DCI indicates a resource for carrying the first information, and the second DCI indicates a resource for carrying the second information; and the first DCI and the second DCI each include a learning phase indication field, and a value of the learning phase indication field in the first DCI is different from a value of the learning phase indication field in the second DCI.

In a possible implementation of the fourth aspect, the first local data is query set data, and the second local data is support set data.

In a possible implementation of the fourth aspect, the fused parameter includes a fused gradient and/or a fused loss.

In a possible implementation of the fourth aspect, the parameter of the updated first submodel includes a model parameter and/or a gradient parameter.

A fifth aspect of this application provides a communication apparatus, including at least one processor. The at least one processor is coupled to a memory, the memory is configured to store a program or instructions, and the at least one processor is configured to execute the program or the instructions, to enable the apparatus to implement the method in any one of the first aspect or the possible implementations of the first aspect.

A sixth aspect of this application provides a communication apparatus, including at least one processor. The at least one processor is coupled to a memory, the memory is configured to store a program or instructions, and the at least one processor is configured to execute the program or the instructions, to enable the apparatus to implement the method in any one of the second aspect or the possible implementations of the second aspect.

A seventh aspect of this application provides a communication apparatus, including at least one logic circuit and an input/output interface. The logic circuit is configured to perform the method according to any one of the first aspect or the possible implementations of the first aspect.

An eighth aspect of this application provides a communication apparatus, including at least one logic circuit and an input/output interface. The logic circuit is configured to perform the method according to any one of the second aspect or the possible implementations of the second aspect.

In a possible design, the communication apparatus provided in the fifth aspect, the sixth aspect, the seventh aspect, or the eighth aspect may be a chip or a chip system.

A ninth aspect of this application provides a computer-readable storage medium. The storage medium is configured to store one or more computer-executable instructions. When the computer-executable instructions are executed by a processor, the processor performs the method in any one of the possible implementations of either of the first aspect and the second aspect.

A tenth aspect of this application provides a computer program product (also referred to as a computer program).

When the computer program product is executed by a processor, the processor performs the method in any one of the possible implementations of either of the first aspect and the second aspect.

An eleventh aspect of this application provides a chip system. The chip system includes at least one processor, configured to support a communication apparatus in implementing a function in any one of the possible implementations of either of the first aspect and the second aspect.

In a possible design, the chip system may further include a memory. The memory is configured to store program instructions and data that are necessary for the first communication apparatus. The chip system may include a chip, or may include a chip and another discrete component. Optionally, the chip system further includes an interface circuit, and the interface circuit provides program instructions and/or data for the at least one processor.

A twelfth aspect of this application provides a communication system. The communication system includes the communication apparatus in the third aspect and the communication apparatus in the fourth aspect, the communication system includes the communication apparatus in the fifth aspect and the communication apparatus in the sixth aspect, and/or the communication system includes the communication apparatus in the seventh aspect and the communication apparatus in the eighth aspect.

For technical effects of any design in the third aspect to the twelfth aspect, refer to technical effects of different designs in the first aspect and the second aspect. Details are not described herein again.

## BRIEF DESCRIPTION OF DRAWINGS

FIG. 1a is a diagram of a communication system according to this application;

FIG. 1b is another diagram of a communication system according to this application;

FIG. 1c is another diagram of a communication system according to this application;

FIG. 2a is a diagram of an AI processing process according to this application;

FIG. 2b is another diagram of an AI processing process according to this application;

FIG. 2c is another diagram of an AI processing process according to this application;

FIG. 2d is another diagram of an AI processing process according to this application;

FIG. 2e is a diagram of an AI processing process according to this application;

FIG. 2f is another diagram of an AI processing process according to this application;

FIG. 2g is another diagram of an AI processing process according to this application;

FIG. 3 is a diagram of interaction in a communication method according to this application;

FIG. 4 is a diagram of a communication scenario according to this application;

FIG. 5 is another diagram of a communication scenario according to this application;

FIG. 6 is another diagram of interaction in a communication method according to this application;

FIG. 7 is another diagram of interaction in a communication method according to this application;

FIG. 8 is a diagram of a communication apparatus according to this application;

FIG. 9 is another diagram of a communication apparatus according to this application;

FIG. 10 is another diagram of a communication apparatus according to this application; and

FIG. 11 is another diagram of a communication apparatus according to this application.

## DESCRIPTION OF EMBODIMENTS

First, some terms in embodiments of this application are described for ease of understanding by a person skilled in the art.

(1) Terminal device: The terminal device may be a wireless terminal device that can receive scheduling and indication information of a network device. A wireless terminal device may be a device providing voice and/or data connectivity for a user, a handheld device having a wireless connection function, or another processing device connected to a wireless modem.

The terminal device may communicate with one or more core networks or the Internet through a RAN. The terminal device may be a mobile terminal device such as a mobile phone (or referred to as a "cellular" phone or a mobile phone (mobile phone)), a computer, or a data card. For example, the terminal device may be a portable, pocket-sized, handheld, computer built-in, or vehicle-mounted mobile apparatus that exchanges voice and/or data with the radio access network. For example, the terminal device is a device like a personal communication service (personal communication service, PCS) phone, a cordless phone, a session initiation protocol (SIP) phone, a wireless local loop (wireless local loop, WLL) station, a personal digital assistant (personal digital assistant, PDA), a tablet computer (Pad), or a computer having a wireless transceiver function. The wireless terminal device may also be referred to as a system, a subscriber unit (subscriber unit), a subscriber station (subscriber station), a mobile station (mobile station, MS), a remote station (remote station), an access point (access point, AP), a remote terminal device (remote terminal), an access terminal device (access terminal), a user terminal device (user terminal), a user agent (user agent), a subscriber station (subscriber station, SS), customer premises equipment (customer premises equipment, CPE), a terminal (terminal), user equipment (user equipment, UE), a mobile terminal (mobile terminal, MT), or the like.

By way of example but not limitation, in embodiments of this application, the terminal device may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or a part of functions without depending on smartphones, for example, smart watches or smart glasses, and include devices that dedicated to only one type of application function and need to collaboratively work with other devices such as smartphones, for example, various smart bands, smart helmets, or smart jewelry for monitoring physical signs.

The terminal may alternatively be an uncrewed aerial vehicle, a robot, a terminal in device-to-device (device-to-device, D2D) communication, a terminal in vehicle-to-everything (vehicle to everything, V2X), a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like.

In addition, the terminal device may be a terminal device in an evolved communication system (for example, a 6th generation (6th generation, 6G) communication system) after a 5th generation (5th generation, 5G) communication system, a terminal device in a future evolved public land mobile network (public land mobile network, PLMN), or the like. For example, a 6G network may further extend a form and a function of a 5G communication terminal, and a 6G terminal includes but is not limited to a vehicle, a cellular network terminal (integrating a function of a satellite terminal), an uncrewed aerial vehicle, and an Internet of things (internet of things, IoT) device.

In embodiments of this application, the terminal device may further obtain an AI service provided by a network device. Optionally, the terminal device may further have an AI processing capability.

(2) Network device: The network device may be a device in a wireless network. For example, the network device may be a RAN node (or device) connecting a terminal device to the wireless network, and may also be referred to as a base station. Currently, some examples of RAN devices are: a base station gNB (gNodeB) in a 5G communication system, a transmission reception point (transmission reception point, TRP), an evolved NodeB (evolved NodeB, eNB), a radio network controller (radio network controller, RNC), a NodeB (NodeB, NB), a home base station (for example, a home evolved NodeB or a home NodeB, HNB), a baseband unit (baseband unit, BBU), or a Wireless Fidelity (wireless fidelity, Wi-Fi) access point AP. In addition, in a network structure, the network device may include a central unit (central unit, CU) node, a distributed unit (distributed unit, DU) node, or a RAN device including a CU node and a DU node.

The network device may be another apparatus that provides a wireless communication function for the terminal device. A specific technology and a specific device form that are used by the network device are not limited in embodiments of this application. For ease of description, this is not limited in embodiments of this application.

The network device may further include a core network device. For example, the core network device includes network elements such as a mobility management entity (mobility management entity, MME), a home subscriber server (home subscriber server, HSS), a serving gateway (serving gateway, S-GW), a policy and charging rules function (policy and charging rules function, PCRF), and a public data network gateway (public data network gateway, PDN gateway, P-GW) in a 4th generation (4th generation, 4G) network, and an access and mobility management function (access and mobility management function, AMF), a user plane function (user plane function, UPF), and a session management function (session management function, SMF) in a 5G network. In addition, the core network device may further include another core network device in the 5G network and a next generation network of the 5G network.

In embodiments of this application, the network device may alternatively be a network node having an AI capability, and may provide an AI service for a terminal or another network device, for example, may be an AI node, a computational power node, a RAN node having an AI capability, or a core network element having an AI capability on a network side (an access network or a core network).

In embodiments of this application, an apparatus configured to implement a function of the network device may be the network device, or may be an apparatus that can support the network device in implementing the function, for example, a chip system. The apparatus may be installed in the network device. In the technical solutions provided in embodiments of this application, an example in which the apparatus configured to implement the function of the network device is a network device is used for describing the technical solutions provided in embodiments of this application.

(3) Configuration and preconfiguration: In this application, both the configuration and the preconfiguration are used. The configuration means that a network device/server sends configuration information of some parameters or values of parameters to a terminal by using a message or signaling, so that the terminal determines, based on the values or the information, a communication parameter or a resource used for transmission. Similar to the configuration, the preconfiguration may be parameter information or a parameter value negotiated by a network device/server with a terminal device in advance, or may be parameter information or a parameter value used by a base station/network device or a terminal device as specified in a standard protocol, or may be parameter information or a parameter value prestored in a base station/server or a terminal device. This is not limited in this application.

Further, these values and parameters may be changed or updated.

(4) Terms "system" and "network" in embodiments of this application may be used interchangeably. "Multiple" refers to two or more than two. The term "and/or" describes an association relationship of associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects. At least one of the following items (pieces) or a similar expression thereof indicates any combination of these items, including a single item (piece) or any combination of a plurality of items (pieces). For example, "at least one of A, B, and C" includes A, B, C, AB, AC, BC, or ABC. In addition, unless otherwise specified, ordinal numbers such as "first" and "second" in embodiments of this application are used to distinguish between a plurality of objects, and are not intended to limit a sequence, a time sequence, priorities, or importance of the plurality of objects.

(5) "Sending" and "receiving" in embodiments of this application represent signal transfer directions. For example, "sending information to XX" may be understood as that a destination end of the information is XX, and may include direct sending through an air interface, or may include indirect sending through an air interface by another unit or module. "Receiving information from YY" may be understood as that a source end of the information is YY, and may include direct receiving from YY through an air interface, or may include indirect receiving from YY through an air interface from another unit or module. "Sending" may alternatively be understood as "outputting" of a chip interface, and "receiving" may alternatively be understood as "inputting" of a chip interface.

In other words, sending and receiving may be performed between devices, for example, between a network device and a terminal device; or may be performed inside a device, for example, sending or receiving between components, modules, chips, software modules, or hardware modules inside the device through a bus, a cable, or an interface.

It may be understood that necessary processing, for example, encoding and modulation, may be performed on the information between the source end at which the information is sent and the destination end, but the destination may understand valid information from the source end. Similar descriptions in this application may be understood similarly, and details are not described again.

(6) In embodiments of this application, "indication" may include a direct indication and an indirect indication, or may include an explicit indication and an implicit indication. Information indicated by a piece of information (for example, the following indication information) is referred to as to-be-indicated information. In a specific implementation process, the to-be-indicated information may be indicated in a plurality of manners, for example, but not limited to, directly indicating the to-be-indicated information, for example, indicating the to-be-indicated information, an index of the to-be-indicated information, or the like. Alternatively, the to-be-indicated information may be indirectly indicated by indicating other information. There is an association relationship between the other information and the to-be-indicated information. Alternatively, only a part of the to-be-indicated information may be indicated, and the remaining part of the to-be-indicated information is known or pre-agreed on. For example, specific information may alternatively be indicated by using an arrangement sequence of pieces of information that are pre-agreed on (for example, predefined in a protocol), to reduce indication overheads to some extent. A specific indication manner is not limited in this application. It may be understood that, for a sender of the indication information, the indication information may indicate to-be-indicated information, and for a receiver of the indication information, the indication information may be for determining to-be-indicated information.

In this application, for same or similar parts of embodiments, mutual reference may be made between embodiments, unless otherwise specified. In embodiments of this application and methods/designs/implementations in embodiments, unless otherwise specified or logic conflicts occur, terms and/or descriptions between different embodiments and between the methods/designs/implementations in embodiments are consistent and may be mutually referenced, and different embodiments and technical features in the methods/designs/implementations in embodiments may be combined to form a new embodiment, method, or implementation based on an internal logic relationship thereof. The following implementations of this application are not intended to limit the protection scope of this application.

This application may be applied to a long term evolution (long term evolution, LTE) system, a new radio (new radio, NR) system, or a communication system (for example, 6G) evolved after 5G. The communication system includes at least one network device and/or at least one terminal device.

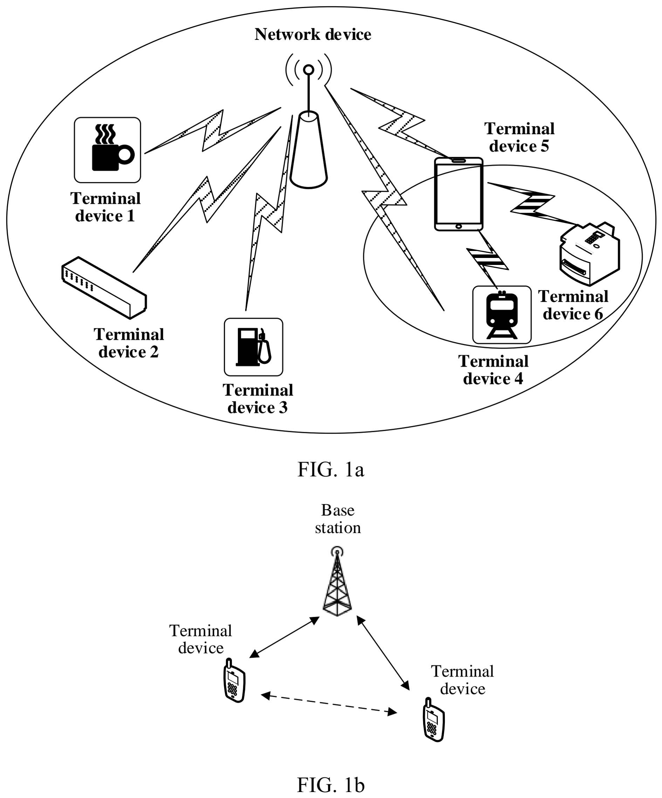

FIG. 1a is a diagram of a communication system according to this application. FIG. 1a shows an example of one network device and six terminal devices. The six terminal devices are a terminal device 1, a terminal device 2, a terminal device 3, a terminal device 4, a terminal device 5, and a terminal device 6. In the example shown in FIG. 1a, an example in which the terminal device 1 is a smart teacup, the terminal device 2 is a smart air conditioner, the terminal device 3 is a smart fuel dispenser, the terminal device 4 is a vehicle, the terminal device 5 is a mobile phone, and the terminal device 6 is a printer is used for description.

As shown in FIG. 1a, an AI configuration information sending entity may be the network device. AI configuration information receiving entities may be the terminal device 1 to the terminal device 6. In this case, the network device and the terminal device 1 to the terminal device 6 form a communication system. In the communication system, the terminal device 1 to the terminal device 6 may send data to the network device, and the network device needs to receive the data sent by the terminal device 1 to the terminal device 6. Besides, the network device may send configuration information to the terminal device 1 to the terminal device 6.

For example, in FIG. 1a, the terminal device 4 to the terminal device 6 may also form a communication system. The terminal device 5 serves as a network device, that is, an AI configuration information sending entity. The terminal device 4 and the terminal device 6 serve as terminal devices, that is, AI configuration information receiving entities. For example, in an internet of vehicles system, the terminal device 5 separately sends AI configuration information to the terminal device 4 and the terminal device 6, and receives data sent by the terminal device 4 and the terminal device 6; and correspondingly, the terminal device 4 and the terminal device 6 receive the AI configuration information sent by the terminal device 5, and send the data to the terminal device 5.

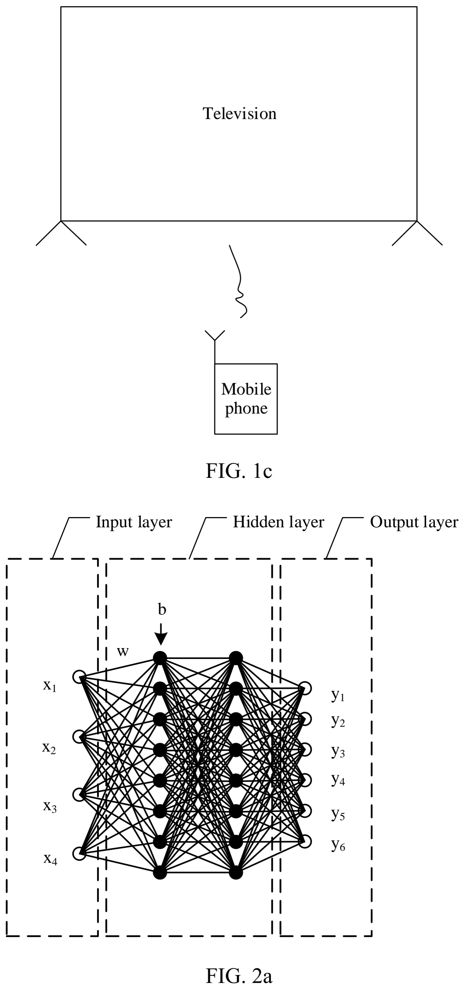

The communication system shown in FIG. 1a is used as an example. In addition to a communication-related business, an AI-related business may be performed between different devices (including between network devices, between a network device and a terminal device, and/or between terminal devices). For example, as shown in FIG. 1b, an example in which a network device is a base station is used. A communication-related business and an AI-related business may be performed between the base station and one or more terminal devices, and the communication-related business and the AI-related business may also be performed between different terminal devices. For another example, as shown in FIG. 1c, an example in which terminal devices include a television and a mobile phone is used. A communication-related service and an AI-related service may also be performed between the television and the mobile phone.

The technical solutions provided in this application may be applied to a wireless communication system (for example, the system shown in FIG. 1a, FIG. 1b, or FIG. 1c). The following briefly describes neural networks that may be used in this application.

1. Fully-connected neural network

The fully-connected neural network is also referred to as a multilayer perceptron (multilayer perceptron, MLP). As shown in FIG. 2a, one MLP includes one input layer (left side), one output layer (right side), and a plurality of hidden layers (middle). There are several nodes at each layer of the MLP, which are referred to as neurons. Neurons at two adjacent layers are connected to each other in pairs.

Optionally, in consideration of neurons at two adjacent layers, an output h of a neuron at a next layer is obtained by calculating a weighted sum of all neurons x at a previous layer that are connected to the neuron at the next layer, and inputting the weighted sum into an activation function, which may be expressed as:

$$h = f(wx + b).$$

w represents a weight matrix, b represents a bias vector, and f represents the activation function.

Further, optionally, an output of the neural network may be recursively expressed as:

$$y = f_n(w_n f_{n-1}(...) + b_n).$$

n represents an index of the neural network layer, $1 \leq n \leq N$, and N represents a total quantity of layers of the neural network.

In other words, the neural network may be understood as a mapping relationship from an input dataset to an output dataset. Generally, the neural network is randomly initialized, and a process of obtaining the mapping relationship from random w and b by using existing data is referred to as training of the neural network.

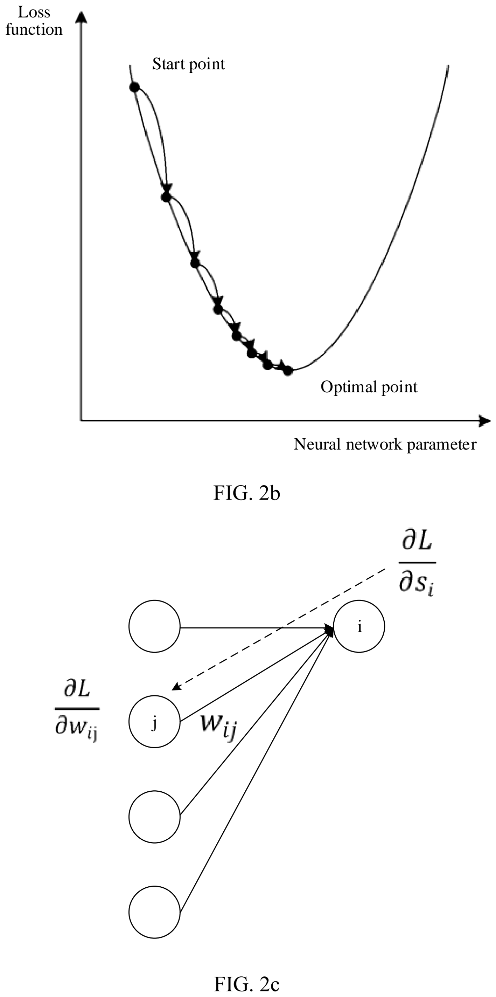

Optionally, a specific training manner is to evaluate an output result of the neural network by using a loss function (loss function). As shown in FIG. 2b, an error may be back-propagated, and neural network parameters (including w and b) can be iteratively optimized by using a gradient descent method, until the loss function reaches a minimum value, that is, an "optimal point" in FIG. 2b. It may be understood that a neural network parameter corresponding to the "optimal point" in FIG. 2b may be used as a neural network parameter in information about a trained AI model.

Further, optionally, a gradient descent process may be expressed as:

$$\boldsymbol{\theta} \leftarrow \boldsymbol{\theta} - \eta \frac{\partial L}{\partial \boldsymbol{\theta}}.$$

$\theta$ represents to-be-optimized parameters (including w and b), L represents a loss function, $\eta$ represents a learning rate for controlling a step of gradient descent, $\partial$ represents a derivation operation, and $\frac{\partial L}{\partial \boldsymbol{\theta}}$ represents a derivative of calculating $\theta$ for *L*.

Further, optionally, a chain rule for obtaining a partial derivative is used in a backpropagation process. As shown in FIG. 2c, a gradient of a parameter at a previous layer may be recursively calculated based on a gradient of a parameter at a next layer, which may be expressed as:

$$\frac{\partial L}{\partial w_{ij}} = \frac{\partial L}{\partial s_i} \frac{\partial s_i}{\partial w_{ij}}.$$

$w_{ij}$ represents a weight of a connection between a node j and a node i, and $s_i$ represents an input weighted sum on the node i.

## 2. Federated learning (Federated Learning, FL)

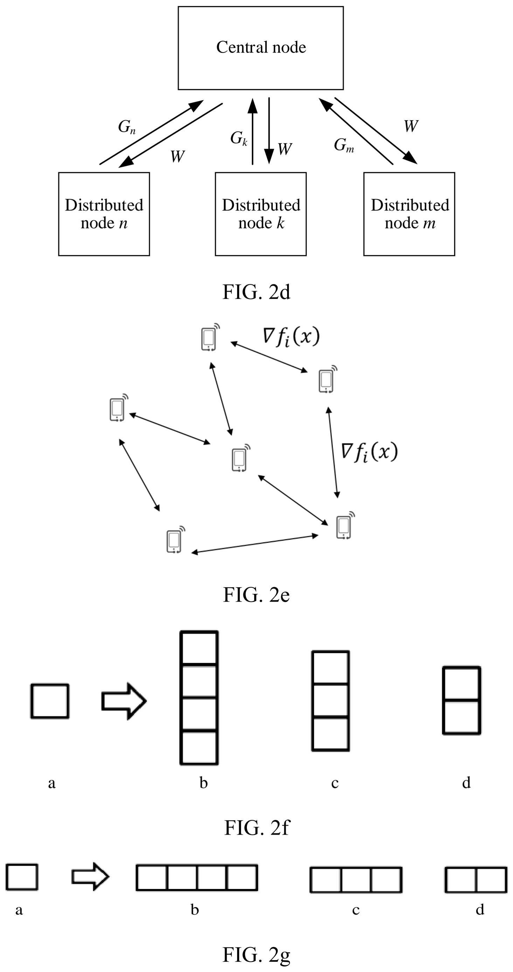

A concept of federated learning is proposed to effectively resolve difficulties faced by the current development of artificial intelligence. While ensuring user data privacy and security, the federated learning facilitates various edge devices and a central-end server to collaborate to efficiently complete a learning task of a model. As shown in FIG. 2d, an FL architecture is a most widely used training architecture in the current FL field. A FedAvg algorithm is a basic algorithm of FL. An algorithm procedure of the FedAvg algorithm is roughly as follows:

(1) A central end initializes a to-be-trained model $w_g^0$ and broadcasts the model to all client devices.

(2) In a $t^{th}$ ($t \in [1, T]$) round, a client $k \in [1, K]$ performs E epochs of training on a received global model $w_g^{t-1}$ based on a local dataset $\mathcal{D}_k$ to obtain a local training result $w_k^t$, and reports the local training result to a central node.

(3) The central node summarizes and collects local training results from all (or some) clients. It is assumed that a set of clients that upload a local model in the $t^{th}$ round is $\mathcal{S}^t$. The central end performs weighted averaging by using a quantity of samples of a corresponding client as a weight, to obtain a new global model. A specific update rule is

$$w_g^t = \sum_{k \in \mathcal{S}^t} \frac{D_k w_k^t}{\sum_{k \in \mathcal{S}^t} D_k}.$$

. Then, the central end broadcasts a global model $w_g^t$ of a latest version to all the client devices for a new round of training.

(4) Steps (2) and (3) are repeated until the model is converged finally or a quantity of training rounds reaches an upper limit.

In addition to the local model $w_k^t$, a trained local gradient $g_k^t$ may also be reported. The central node averages local gradients, and updates the global model based on a direction of an average gradient.

It can be learned that, in an FL framework, a dataset exists on a distributed node. To be specific, the distributed node collects a local dataset, performs local training, and reports a local result (a model or a gradient) obtained through training to the central node. The central node does not have a dataset, is only responsible for fusing training results of distributed nodes to obtain a global model, and delivers the global model to the distributed nodes.

3. Decentralized learning

Different from federated learning, decentralized learning, as shown in FIG. 2e, is another distributed learning architecture that considers a fully distributed system without a central node. A design target f(x) of a decentralized learning system is generally an average of targets $f_i(x)$ of all nodes, that is, $f(x) = \frac{1}{n}\sum_{i=1}^{n} f_i(x)$. n represents a quantity of distributed nodes, and x represents a to-be-optimized parameter. In machine learning, x is a parameter of a machine learning model (for example, a neural network model). Each node calculates a local gradient $\nabla f_i(x)$ by using local data and the local target $f_i(x)$, and then sends the local gradient to a neighboring node that is reachable in communication. After receiving gradient information sent by a neighboring node of any node, the node may update a parameter x of a local model according to the following formula:

$$ x_i^{k+1} = x_i^k - \alpha_k \left( \frac{1}{|N_i|} \sum_{j \in N_i} \nabla f_j(x_j^k) \right). $$

$x_i^{k+1}$ represents a parameter of a local model obtained after a $(k+1)^{th}$ (where k is a natural number) update in an $i^{th}$ node, $x_i^k$ represents a parameter of a local model obtained after a $k^{th}$ update in the $i^{th}$ node (if k is 0, it indicates that $x_i^k$ is a parameter of a local model that is in the $i^{th}$ node and that does not participate in update), $\alpha_k$ represents an optimization coefficient, $N_i$ represents a set of neighboring nodes of the node i, and $|N_i|$ represents a quantity of elements in the set of neighboring nodes of the node i, that is, a quantity of the neighboring nodes of the node i. Through information exchange between nodes, the decentralized learning system will finally learn a unified model.

4. Scalable and distributed learning

In the federated learning and the decentralized learning described above, a parameter or a gradient of a complete neural network model needs to be exchanged between nodes. When the neural network model may be split into a plurality of submodels, a parameter or a gradient of a part of the submodels may be exchanged.

For example, a scalable neural network model may be classified into a width scalable neural network model shown in FIG. 2f and a depth scalable neural network model shown in FIG. 2g. The width scalable neural network model and the depth scalable neural network model are respectively formed by horizontally superposing submodels or vertically cascading submodels. For example, in FIG. 2f, for a neural network submodel a in the complete neural network model, neural network submodels b, c, and d in FIG. 2f may be obtained by vertically scaling layers of the neural network. For another example, in FIG. 2g, for a neural network submodel a in the complete neural network model, neural network models b, c, and d in FIG. 2g may be obtained by horizontally scaling neurons at a same layer of the neural network.

Distributed learning based on the scalable neural network model is referred to as scalable and distributed learning. In a scalable and distributed learning system, instead of a parameter or a gradient of a complete model, a parameter or a gradient of a submodel may be exchanged between nodes, so that communication overheads are reduced.

The technical solutions provided in this application may be applied to a wireless communication system (for example, the system shown in FIG. 1a or FIG. 1b). In the wireless communication system, a communication node generally has a signal sending and receiving capability and a computing capability. A network device having a computing capability is used as an example. The computing capability of the network device is mainly to provide computational power support for a signal sending and receiving capability (for example, perform computation on a time-domain resource, a frequency-domain resource, or the like for carrying a signal), to implement a communication task between the network device and another communication node.

However, in a communication network, the computing capability of the communication node may still be sufficient after providing computational power support for the foregoing communication task. Therefore, how to use these computing capabilities is a technical problem to be urgently resolved.

In a possible implementation, the computing capability of the communication node may be used in a distributed learning scenario. In the distributed learning scenario, local data of different users may be distributed differently, and different users have different performance requirements. In other words, AI algorithms need to have personalized features, and different users may process local data based on personalized AI algorithms (for example, machine learning models) to meet personalized requirements. As a user moves and an ambient environment changes, user data distribution also changes. To quickly adapt to a new environment without greatly affecting performance, the AI algorithms further need to have a capability of few-shot learning. Different from federated learning, meta-learning (meta-learning) is often used to complete few-shot learning (few-shot learning) and personalized learning (personalized learning). A procedure for meta-learning is as follows:

Step 1: Sample a group of I tasks $\mathcal{T}_i \sim p(\mathcal{T})$ from tasks that obey distribution p(T). For example, each task is an image classification task (where the image classification task may be understood as an N-class (N≥2) classification task), that is, data labels are of N categories. Each task (for example, a task i) includes a support set (support set) $D_i^S$ including K × N samples and a query set (query set) $D_i^Q$ including M × N samples. K represents a quantity of data samples of each category (N categories in total) in the support set, and M represents a quantity of data samples of each category (N categories in total) in the query set. The support set may be used to train a model to be of an intermediate version, and the query set may be used to calculate a loss based on the intermediate version.

Step 2: For the task i, train a machine learning model by using the support set $D_i^S$, and update a parameter of the machine learning model to obtain the following: $\theta_i' = \theta - \alpha \nabla_\theta \mathcal{L}_{D_i^S}(\theta)$. θ represents an original parameter of the model, $\theta_i'$ represents a parameter of an updated model, α represents a first learning rate, and $\nabla_\theta \mathcal{L}_{D_i^S}(\theta)$ represents a gradient obtained by performing a gradient calculation operation on the model based on the support set $D_i^S$.

Step 3: Calculate, by using the query set $D_i^Q$, a gradient $\nabla_\theta \mathcal{L}_{D_i^Q}(\theta_i')$ of a loss of the updated model for the original parameter θ. $\nabla_\theta \mathcal{L}_{D_i^Q}(\theta_i')$ represents a gradient obtained by performing a gradient calculation operation on the updated model in step 2 based on the query set $D_i^Q$.

Step 4: Update the model by using gradients of query sets of the group of tasks (tasks i, where i = [1,2, ..., I]), to obtain the following: $\theta = \theta - \beta \nabla_\theta \sum_{i=1}^I \mathcal{L}_{D_i^Q}(\theta_i')$. θ represents the original parameter of the model, β represents a second learning rate, and $\nabla_\theta \sum_{i=1}^I \mathcal{L}_{D_i^Q}(\theta_i')$ represents a sum of gradients $\nabla_\theta \mathcal{L}_{D_i^Q}(\theta_i')$ obtained through calculation in all the I tasks.

Through meta-learning, a good initialization model can be obtained in step 4. A node that subsequently uses the model can perform fine-tuning on the initialization model based on local data, to obtain a personalized model.

However, in the foregoing meta-learning method, nodes participating in meta-learning use a same model structure in step 1 to step 4 described above, without considering different capabilities of different nodes and different features of local datasets. Consequently, flexibility is low, and it is difficult to meet a personalized requirement of each node.

To resolve the foregoing problems, this application provides a communication method and a related device, so that computational power of a communication node can be used for update of a learning model, and a personalized requirement of a first node for a first submodel in the learning model can be met while enhancing model generalization performance of the first submodel in the learning model. Detailed descriptions are provided below with reference to the accompanying drawings.

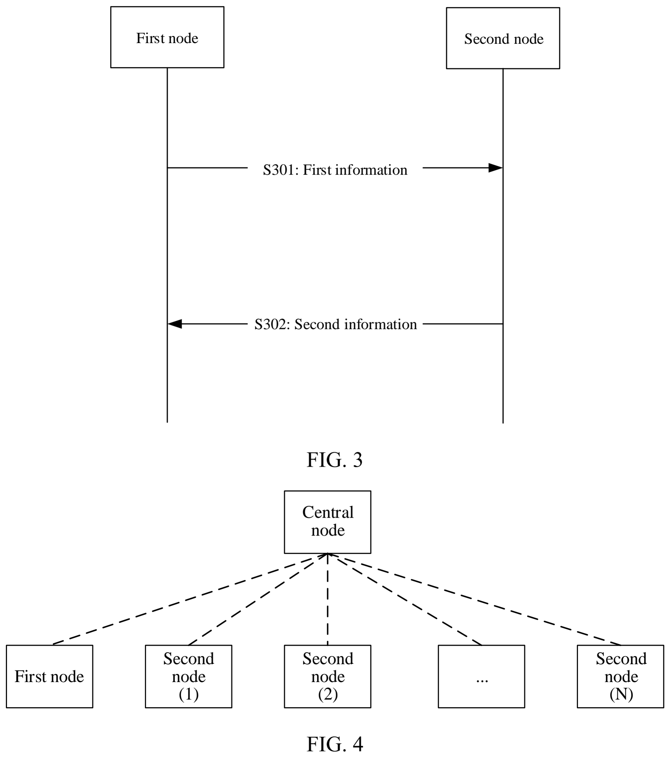

FIG. 3 is a diagram of a communication method according to this application. The method includes the following steps.

It should be noted that in FIG. 3, the method is described by using an example in which a first node and a second node perform interaction. However, an entity for performing interaction is not limited in this application. For example, in FIG. 3 and a corresponding implementation, S301 is performed by the first node, may be performed by a chip, a chip system, or a processor that supports the first node in implementing the method, or may be a logical module or software that can implement all or a part of functions of the first node. In FIG. 3 and the corresponding implementation, the second node in S301 and S302 may alternatively be replaced with a chip, a chip system, or a processor that supports the second node in implementing the method, or may be replaced with a logic module or software that can implement all or a part of functions of the second node. The first node may be a terminal device or a network device, and the second node may also be a terminal device or a network device.

S301: The first node sends first information, and correspondingly, the second node receives the first information.

In step S301, the first information is used to determine a fused parameter obtained by separately processing a first submodel by using first local data of N second nodes, where N is a positive integer. In addition, the first submodel is included in a learning model, and the learning model further includes a second submodel.

S302: The second node sends second information, and correspondingly, the first node receives the second information.

In step S302, the second information indicates a parameter of an updated first submodel, the updated first submodel is obtained by processing the first submodel based on the fused parameter and second local data of the first node, and the parameter of the updated first submodel is used to determine an updated learning model.

It should be understood that, the learning model may be understood as a model used for AI learning and inference in an AI manner, and the learning model may be replaced with an AI model, an AI learning model, a machine learning model, a neural network, an AI network, or the like.

It should be understood that a node participating in update of the learning model may include the first node and the N second nodes. The node participating in the update of the learning model may be a communication node, that is, the first node and the N second nodes each may be a communication node. The communication node includes a network device and/or a terminal device.

Optionally, the node participating in the update of the learning model may further include a node other than the first node and the N second nodes. This is not limited herein.

Optionally, different nodes participating in the update of the learning model may communicate with each other in a plurality of manners. For example, different nodes may be nodes in a decentralized learning model, and a system including the different nodes may be understood as a fully distributed system without a central node. In this case, the different nodes may communicate with neighboring nodes to participate in the update of the learning model. For another example, different nodes may be nodes in a centralized learning model, and a system including the different nodes may be understood as a distributed system with a central node (or referred to as a control node). In this case, the different nodes may communicate with the central node to participate in the update of the learning model.

It should be noted that the first local data and the second local data may be the same. In other words, in a same node, the first local data and the second local data may be the same. Alternatively, the first local data and the second local data may be different. For example, the first local data may be query set data, and the second local data may be support set data. The learning model may be a learning model in a meta-learning scenario. Generally, a node in the meta-learning scenario may include support set data used to train a model to be of an intermediate version, and may further include query set data used to calculate a loss based on the intermediate version. In other words, in the node participating in the update of the learning model, the first local data used to process the model to obtain a loss and/or a gradient may be query set data, and the second local data used to process the model may be support set data.

It should be noted that the learning model may include at least two submodels, for example, the first submodel and the second submodel. Optionally, the learning model may further include a model other than the first submodel and the second submodel. This is not limited herein. The learning model may be used to execute an AI task, and the first submodel and the second submodel may be used to execute subtasks of the AI task. In other words, an AI task executed by the first submodel and an AI task executed by the second submodel may be understood as a part of the AI task executed by the learning model.

For example, the AI task executed by the learning model may be an autonomous driving task. Generally, image recognition is a necessary part required for the autonomous driving task. For example, image recognition tasks such as a human body image recognition task, a license plate image recognition task, and an obstacle image recognition task may be subtasks of the autonomous driving task. Correspondingly, the AI task executed by the first submodel or the AI task executed by the second submodel may be any one of the image recognition tasks.

For another example, the AI task executed by the learning model may be an image classification task (or referred to as an N-class classification task). Generally, the image classification may include image classification between different animals (for example, image classification between cats and dogs), image classification between different plants (for example, image classification between herbs and woody plants), and the like. In other words, an image classification task between different animals, an image classification task between different plants, and the like may be subtasks of the image classification task. Correspondingly, the AI task executed by the first submodel or the AI task executed by the second submodel may be any one of the image classification task between different animals and the image classification task between different plants.

For another example, the AI task executed by the learning model may be a machine translation task. Generally, a word segmentation task, a syntax analysis task, a sentence rewriting task, and the like may be subtasks of the machine translation task. Correspondingly, the AI task executed by the first submodel or the AI task executed by the second submodel may be any one of the word segmentation task, the syntax analysis task, and the sentence rewriting task.

It should be understood that an updated model (including the updated first submodel, an updated second submodel, the updated learning model, and the like) may be understood as a model obtained through processing such as update/iteration/improvement on a parameter in the model.

Optionally, a basis for determining the updated learning model may include only the parameter of the updated first submodel. Alternatively, a basis for determining the updated learning model may include the parameter of the updated first submodel, and may further include a parameter of another updated submodel (for example, an updated second submodel). For example, the AI task executed by the learning model may be an autonomous driving task. When the learning model needs to optimize only a single subtask (for example, the single subtask is a license plate image recognition task), a process of updating the learning model may be understood as updating the first submodel that is in the learning model and that is used to execute the license plate image recognition task. Correspondingly, a basis for determining the updated learning model may include only the parameter of the updated first submodel. When the learning model needs to optimize M (where M is an integer greater than or equal to 2) subtasks, a process of updating the learning model may be understood as updating M submodels (where the M submodels include the first submodel and another submodel) that are in the learning model and that are used to execute the M subtasks. Correspondingly, a basis for determining the updated learning model may include the parameter of the updated first submodel and a parameter of the another updated submodel (for example, the updated second submodel).

Optionally, local information (including local data, a local capability, and/or the like) of the node participating in the update of the learning model may vary. Correspondingly, different nodes may focus on different submodels. In this application, a submodel on which the first node focuses includes the first submodel, and the first submodel may be referred to as a focus submodel, a target submodel, or the like of the first node, and the another submodel (for example, the second submodel) in the learning model may be referred to as a non-focus submodel, another submodel, or the like of the first node. It may be understood that the another submodel (for example, the second submodel) may be a focus submodel, a target submodel, or the like of another node (for example, the second node). For example, the AI task executed by the learning model may be an autonomous driving task. Local data of the first node may include data collected by a parking lot camera. In this case, the submodel on which the first node focuses may be a submodel for executing a license plate image recognition task. Local data of the second node may include data collected by a camera near a sidewalk. In this case, a submodel on which the second node focuses may be a submodel for executing a human body image recognition task.

In a possible implementation, in the method shown in FIG. 3, the method further includes: The first node sends sixth information, where the sixth information indicates a loss and/or a gradient obtained by processing the second submodel by using first local data of the first node. Specifically, the first node may further send the sixth information that indicates the loss and/or the gradient obtained by processing the second submodel by using the first local data of the first node, so that a receiver of the sixth information can learn of the loss and/or the gradient, and can subsequently update the second submodel based on the loss and/or the gradient.

In a possible implementation, in the method shown in FIG. 3, the method further includes: The first node sends or receives first downlink control information (downlink control information, DCI) and second DCI, where the first DCI indicates a resource for carrying the first information, and the second DCI indicates a resource for carrying the second information; and the first DCI and the second DCI each include a learning phase indication field, and a value of the learning phase indication field in the first DCI is different from a value of the learning phase indication field in the second DCI. Specifically, the resource for carrying the first information and the resource for carrying the second information may be scheduled by using different DCI. The first node may serve as a scheduling party of the resource, or the first node may serve as a scheduled party of the resource, so that the first node implements resource scheduling by sending or receiving the first DCI and the second DCI.

In addition, the first DCI and the second DCI each may include the learning phase indication field, and different resources are indicated by using different values of the field.

In a possible implementation, the fused parameter includes a fused gradient and/or a fused loss. Specifically, the fused parameter obtained by separately processing the first submodel by using the first local data of the N second nodes may be obtained by fusing gradients and/or losses obtained by separately processing the first submodel by using the first local data of the N second nodes, to enhance a model generalization capability of the updated first submodel that is subsequently obtained based on the fused parameter and a model generalization capability of the updated learning model.

It should be understood that the first information may be used to determine the fused parameter obtained by separately processing the first submodel by using the first local data of the N second nodes. Generally, the fused gradient included in the fused parameter may be a gradient obtained by processing a parameter of a submodel, and the fused loss included in the fused parameter may be a loss (or a loss function) obtained by processing a parameter of a learning model.

Optionally, when the fused parameter includes the fused gradient, for the first node, the first node may locally process the first submodel based on the second local data of the first node to obtain a first submodel of an intermediate version, and the first node may process the first submodel of the intermediate version based on the fused gradient to obtain the updated first submodel. When the fused parameter includes the fused loss, for the first node, after locally processing the learning model based on the fused loss to obtain a learning model of an intermediate version, the first node may process a first submodel in the learning model of the intermediate version based on the second local data of the first node to obtain the updated first submodel.

According to the technical solution shown in FIG. 3, after the first node receives the first information, the first node may determine, based on the first information, the fused parameter obtained by separately processing the first submodel by using the first local data of the N second nodes. Then, the first node may process the first submodel based on the fused parameter and the second local data of the first node, to obtain the updated first submodel. In other words, the first node may update the first submodel in the learning model based on the second local data of the first node and the fused parameter obtained by separately processing the first submodel based on first local data of other nodes (namely, the N second nodes). Therefore, the first local data of the other nodes and the second local data of the first node are used as a basis for updating the first submodel, so that a personalized requirement of the first node for the first submodel in the learning model can be met while enhancing model generalization performance of the first submodel in the learning model.

In addition, in the foregoing technical solution, the first node may further send the second information that indicates the parameter of the updated first submodel, where the parameter of the updated first submodel is used to determine the updated learning model. Therefore, during update of the learning model, the updated learning model determined based on the parameter of the updated first submodel can also enhance model generalization performance and meet a personalized requirement of the node.

In the method shown in FIG. 3, an architecture in which the first node and the N second nodes are located may be of a plurality of possible types. Correspondingly, the first node may receive the first information in a plurality of manners in step S301. Descriptions are provided below with reference to the accompanying drawings.

Implementation 1: As shown in FIG. 4, for example, N is greater than 2. There may be a central node in the architecture in which the first node and the N second nodes are located. For a process of interaction between the nodes, refer to the architecture shown in FIG. 2d. Correspondingly, in Implementation 1, the first information received by the first node in step S301 includes the fused parameter.

It should be understood that, in FIG. 4, the central node may be any one of the N second nodes, or the central node is different from the first node and the N second nodes. This is not limited herein.

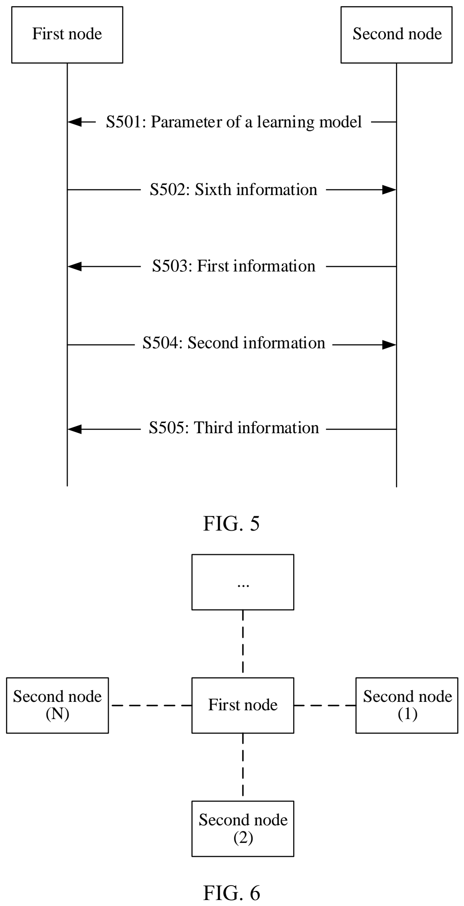

In an implementation example, with reference to an implementation process shown in FIG. 5, descriptions are provided below by using an example in which the central node may be any one of the N second nodes. As shown in FIG. 5, the method includes the following steps.

S501: The second node sends a parameter of a learning model, and correspondingly, the first node receives the parameter of the learning model. After receiving the parameter of the learning model, the first node may locally generate or construct the learning model based on the parameter of the learning model.

It should be noted that, compared with the updated learning model mentioned in another step of this application, the learning model generated or constructed by using the parameter exchanged in step S501 may be referred to as an initial learning model.

Optionally, in addition to a manner indicated by the central node, the first node and the second node may obtain the parameter of the initial learning model in another manner. For example, the parameter of the initial learning model is predefined in a protocol/standard, or the parameter of the initial learning model is obtained by using an indication of a core network element or an access network element. This is not limited herein. Therefore, step S501 is optional.

In an implementation example, after step S501, the first node may obtain a parameter of an updated first submodel based on second local data. For example, the first node is a node k, and the second local data of the first node is a support set (support set) $D_S^k$. A focus submodel of the first node (namely, a submodel on which the second node does not focus) may be denoted as a submodel S, and a focus submodel of the second node (namely, a submodel on which the first node does not focus) may be denoted as a submodel O. The first node trains and updates a first submodel by using data in the support set $D_S^k$, to obtain the following:

$$S_{t+1}^k = S_t^k - \gamma \nabla_S \mathcal{L}_{D_S^k}(S_t^k, O_0^k).$$

$S_t^k$ represents a parameter of the first submodel before the update, $S_{t+1}^k$ represents the parameter of the updated first submodel, $\gamma$ represents a learning rate, $\mathcal{L}_{D_S^k}(S_t^k, O_0^k)$ represents a loss function, on training data of the support set $D_S^k$, of a learning model including the first submodel $S_t^k$ and another submodel (namely, a submodel on which the first node does not focus) $O_0^k$, and $\nabla_S \mathcal{L}_{D_S^k}(S_t^k, O_0^k)$ represents a gradient of the loss function for the parameter of the first submodel. One or more steps (where T steps are used as an example, and T is greater than or equal to 1) may be performed according to the foregoing formula to train and update a target submodel, so as to obtain a parameter $S_{T+t}^k$ (T≥1) of an updated target submodel. It should be noted that, in this step, a parameter of the another submodel (namely, the submodel on which the first node does not focus) is not updated.

S502: The first node sends sixth information, and correspondingly, the second node receives the sixth information, where the sixth information indicates a loss and/or a gradient obtained by processing a second submodel by using first local data of the first node.

It should be noted that, in step S502, the second node serving as the central node may further receive, from another node, a loss and/or a gradient obtained by processing a non-focus submodel of the another node. A non-focus submodel of at least one other node is the first submodel, so that the second node can determine first information based on a loss and/or a gradient obtained by processing the non-focus submodel of the other node.

In an implementation example, before step S502, the first node may process the second submodel based on the first local data to obtain the loss and/or the gradient. For example, the first local data is a query set $D_Q^k$. The first node calculates, by using data in the query set $D_Q^k$, a loss function $\mathcal{L}_{D_S^k}(S_t^k, O_0^k)$ of the learning model on the data in the query set $D_Q^k$, and/or the first node may calculate a gradient $\nabla_O \mathcal{L}_{D_S^k}(S_t^k, O_0^k)$ of the loss function for the parameter of the another submodel $O_0^k$ (for example, the second submodel), to obtain the loss and/or the gradient indicated by the sixth information.

**In** addition, after step S502, the second node can determine, based on the sixth information, a fused parameter obtained by separately processing the second submodel by using first local data of one or more nodes (including the first node), and send indication information to a node (including a node other than the central node in the N second nodes) that focuses on the second submodel, where the indication information indicates the fused parameter obtained by separately processing the second submodel by using the first local data of the one or more nodes.

In an implementation example, in a process in which the second node determines the fused parameter, the second node may determine the fused parameter through loss function fusion or gradient fusion. For example, the second node determines a fused parameter obtained by processing the first submodel by using first local data of the N second nodes. After receiving the sixth information, the second node serving as the central node may perform loss function fusion or gradient fusion to obtain a fused loss $\sum_{m=1}^{M} \mathcal{L}_{D_Q^m}(S_0^m, O_{P^m}^m)$ or a fused gradient $\sum_{m=1}^{M} \nabla_S \mathcal{L}_{D_Q^m}(S_0^m, O_{P^m}^m)$. A superscript m indicates that corresponding S and O are a parameter of the submodel S and a parameter of the submodel O on a node m, $D_Q^m$ represents a query set of the node m, $\mathcal{L}_{D_Q^m}$ represents a loss function calculated based on the query set $D_Q^m$, and $\nabla_S$ represents a gradient of the loss function for the parameter of the submodel S, $P^m$ represents a quantity of training update steps of the submodel O on the node m, which may be the same as or different from T, and M represents a quantity of all nodes that use the first submodel as another submodel (or referred to as a non-focus submodel).

It should be noted that, as described above, the second submodel may not be updated. Therefore, step S502 is optional.

S503: The second node sends first information, and correspondingly, the first node receives the first information. The first information is used to determine the fused parameter obtained by separately processing the first submodel by using the first local data of the N second nodes.

Specifically, in step S503, the first information received by the first node may include the fused parameter, so that the first node can directly obtain the fused parameter based on the received first information, and the first node can subsequently determine the updated first submodel based on the fused parameter.

In an implementation example, when the fused parameter received by the first node includes the fused loss (denoted as $\sum_{m=1}^{M} \mathcal{L}_{D_Q^m}(S_0^m, O_{P^m}^m)$ ), the first node may calculate the fused gradient (denoted as $\sum_{m=1}^{M} \nabla_S \mathcal{L}_{D_Q^m}(S_0^m, O_{P^m}^m)$ ) based on the fused loss; or when the fused parameter received by the first node includes the fused gradient $\sum_{m=1}^{M} \nabla_S \mathcal{L}_{D_Q^m}(S_0^m, O_{P^m}^m)$, the first node may update the first submodel based on the fused gradient

$$\sum_{m=1}^{M} \nabla_S \mathcal{L}_{D_Q^m}(S_0^m, O_{P^m}^m) \text{, to obtain the following: } S_{T+1}^k = S_T^k - \beta \sum_{m=1}^{M} \nabla_S \mathcal{L}_{D_Q^m}(S_0^m, O_{P^m}^m) .$$

It should be noted that for another implementation process of step S503, refer to the foregoing implementation process of step S301. Details are not described herein again.

S504: The first node sends second information, and correspondingly, the second node receives the second information. The second information indicates the parameter of the updated first submodel, the updated first submodel is obtained by processing the first submodel based on the fused parameter and the second local data of the first node, and the parameter of the updated first submodel is used to determine an updated learning model.

It should be noted that for an implementation process of step S504, refer to the foregoing implementation process of step S302. Details are not described herein again.

Optionally, as described above, a basis for determining the updated learning model may include the parameter of the updated first submodel, and a parameter of another submodel (for example, the second submodel). Correspondingly, in addition to obtaining the parameter of the updated first submodel in step S504, the second node may also interact with another node, to obtain a parameter of another updated submodel (for example, an updated second submodel).

S505: The second node sends third information, and correspondingly, the first node receives the third information. The third information indicates a parameter of the updated learning model.

Therefore, the first node can obtain the parameter of the updated learning model based on the third information, and determine the updated learning model based on the parameter, so that the first node updates the learning model in which the first submodel and the second submodel are located.

Optionally, the node that sends the first information in step S503 and the node that sends the third information in step S505 may be the same. For example, in the scenario shown in FIG. 4, the same node may be a central node of the first node and the N second nodes. In other words, the node configured to perform the sending actions in step S503 and step S505 in FIG. 5 may be the central node in FIG. 4. For another example, the same node may be a neighboring node of the first node (where the neighboring node may be one of the N second nodes), and the neighboring node has a capability of performing fusion processing on parameters obtained by separately processing the first submodel by using the first local data of the N second nodes to obtain the fused parameter.

Optionally, update of the learning model in step S501 to step S505 may be performed for one or more rounds. To be specific, after nodes perform step S501 to step S505 in a specific round, the nodes may re-execute the update of the learning model in step S501 to step S505 based on a result of step S505, until a preset condition is met. The preset condition may be that a node (for example, the central node, the first node, or the second node) determines that performance of the updated learning model meets a requirement, the updated learning model is converged to meet a predetermined condition, or the like.

Optionally, in the implementation process shown in FIG. 5, in each round of training, interaction between the nodes may be divided into two phases. When the central node is a network device and another distributed node is a terminal device, one uplink transmission (namely, from the distributed node to the central node) and one downlink transmission (namely, from the central node to the distributed node) are separately performed in each phase. Content in each transmission varies, as shown in Table 1 below.

Table 1

| Phase | Direction | Gradient |
|---|---|---|
| I | Uplink | Gradient of another submodel (for example, the sixth information) |
| I | Downlink | Fused loss or fused gradient of the target submodel (for example, the first information) |
| II | Uplink | Parameter of a local target submodel (for example, the second information) |
| II | Downlink | Parameter of a global complete model or target submodel (for example, the third information) |

Therefore, when the network device schedules the foregoing four transmissions, two bits may be added to DCI. The two bits correspond to four values, and the four values each indicate a specific phase and direction in which a resource scheduled by a node by using the current DCI is used for transmission. Alternatively, when different formats (formats) of DCI are used to distinguish between directions of the scheduled transmissions, only one bit may be added to the DCI. The bit corresponds to two values, and the two values each indicate a specific phase in which a resource scheduled by a node by using the current DCI is used for transmission.

Implementation 2: As shown in FIG. 6, there may be no central node in the architecture in which the first node and the N second nodes are located. For a process of interaction between the nodes, refer to the architecture shown in FIG. 2e. Correspondingly, in Implementation 2, the first information received by the first node in step S301 includes N pieces of sub-information, the N pieces of sub-information are respectively from the N second nodes, and the N pieces of sub-information respectively indicate parameters obtained by processing the first submodel by using the first local data of the N second nodes.

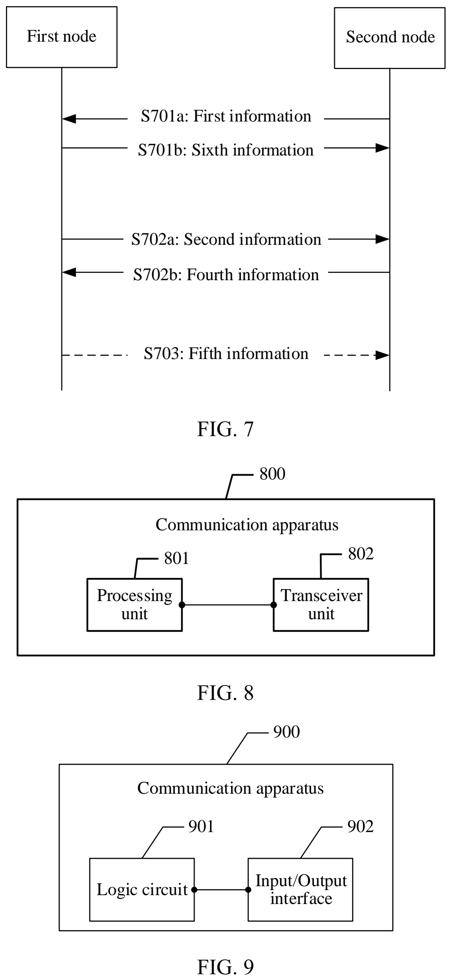

In an implementation example, descriptions are provided below with reference to an implementation process shown in FIG. 7. As shown in FIG. 7, the method includes the following steps.

S701a: The second node sends first information, and correspondingly, the first node receives the first information. The first information is used to determine a fused parameter obtained by separately processing a first submodel by using the first local data of the N second nodes.

S701b: The first node sends sixth information, and correspondingly, the second node receives the sixth information. The sixth information indicates a loss and/or a gradient obtained by processing a second submodel by using first local data of the first node.

Through interaction between step S701a and step S701b, a parameter obtained by processing, by using first local data of each node, a submodel on which the node does not focus may be exchanged between the nodes, so that each node can obtain, from another node, a parameter obtained by processing a submodel on which the node focuses (for example, the first node may obtain a related parameter of the first submodel on which the first node focuses, and the second node may obtain a related parameter of the second submodel on which the second node focuses). In this case, each node can process, based on the obtained parameter and second local data of each node, a submodel on which the node focuses, to obtain an updated submodel (for example, the first node may obtain an updated first submodel, and the second node may obtain an updated second submodel).

S702a: The first node sends second information, and correspondingly, the second node receives the second information. The second information indicates a parameter of the updated first submodel, the updated first submodel is obtained by processing the first submodel based on the fused parameter and the second local data of the first node, and the parameter of the updated first submodel is used to determine an updated learning model.

S702b: The second node sends fourth information, and correspondingly, the first node receives the fourth information. The fourth information indicates a parameter of the updated second submodel, and the parameter of the updated second submodel is used to determine the updated learning model.

Through interaction between step S702a and step S702b, a parameter of an updated submodel on which each node focuses may be exchanged between the nodes, so that each node can obtain, from another node, a related parameter obtained by updating a submodel on which the node does not focus (for example, the first node may send a related parameter of the updated first submodel on which the first node focuses, and the second node may send a related parameter of the updated second submodel on which the second node focuses). In this case, each node can perform model fusion based on the obtained parameter and the updated submodel on which each node locally focuses, to obtain a fusion learning model (for example, the first node may determine a fusion learning model based on the parameter of the updated first submodel and the parameter of the updated second submodel, and the first node may determine a fusion learning model based on the parameter of the updated second submodel and the parameter of the updated first submodel), so as to implement update of learning models on the plurality of nodes.

It should be understood that, for an implementation process of each piece of information in the steps shown in FIG. 7, refer to the implementation process of each piece of information in the steps shown in FIG. 5.

It should be noted that in step S702b, K nodes may send K pieces of fourth information. Correspondingly, the first node may receive the K pieces of fourth information, where K is an integer greater than or equal to 1. It should be understood that FIG. 7 is a diagram of an implementation in which K is equal to 1. In other words, FIG. 7 is described by using an example in which there is one second node.

Optionally, the first node may receive N pieces of sub-information through communication with the N second nodes over communication links between the first node and the N second nodes. Alternatively, the first node may receive N pieces of sub-information through communication with the K nodes (for example, the K nodes may be one or more of the N second nodes, or the K nodes may be relay nodes between the first node and the N second nodes) over communication links between the first node and the K nodes. This is not limited herein.

Optionally, K is equal to N, or K is less than N.

Optionally, in the method shown in FIG. 7, K is an integer greater than 1, and the method further includes step S703: The first node sends fifth information, where the fifth information indicates a fusion result obtained based on the K pieces of fourth information. Specifically, when the first node receives more than one piece of fourth information, the first node may perform fusion processing on K parameters of the updated second submodel that are respectively indicated by the K pieces of information, and indicate a fusion result of the fusion processing by using the fifth information, so that a receiver of the fifth information can determine the updated learning model based on the K fusion results of the updated second submodel.

Refer to FIG. 8. An embodiment of this application provides a communication apparatus 800. The communication apparatus 800 can implement a function of the first node (where the first node is a terminal device or a network device) in the foregoing method embodiments, and therefore, can also implement the beneficial effects of the foregoing method embodiments. In this embodiment of this application, the communication apparatus 800 may be the first node, or may be an integrated circuit or an element in the first node, for example, a chip. In the following embodiment, an example in which the communication apparatus 800 is the first node is used for description.

In a possible implementation, when the apparatus 800 is configured to perform the method performed by the first node in any one of the foregoing embodiments, the apparatus 800 includes a processing unit 801 and a transceiver unit 802. The transceiver unit 802 is configured to receive first information, where the first information is used to determine a fused parameter obtained by separately processing a first submodel by using first local data of N second nodes, N is a positive integer, the first submodel is included in a learning model, and the learning model further includes a second submodel. The processing unit 801 is configured to determine second information, where the second information indicates a parameter of an updated first submodel, the updated first submodel is obtained by processing the first submodel based on the fused parameter and second local data of the first node, and the parameter of the updated first submodel is used to determine an updated learning model. The transceiver unit 802 is further configured to send the second information.

In a possible implementation, the first information includes the fused parameter.

In a possible implementation, the transceiver unit 802 is further configured to receive third information, where the third information indicates a parameter of the updated learning model.

In a possible implementation, the first information includes N pieces of sub-information, the N pieces of sub-information are respectively from the N second nodes, and the N pieces of sub-information respectively indicate parameters obtained by processing the first submodel by using the first local data of the N second nodes.

In a possible implementation, the transceiver unit 802 is further configured to receive K pieces of fourth information, where the fourth information indicates a parameter of an updated second submodel, K is an integer greater than or equal to 1, and the parameter of the updated second submodel is used to determine the updated learning model.

In a possible implementation, K is an integer greater than 1, and the transceiver unit 802 is further configured to send fifth information, where the fifth information indicates a fusion result obtained based on the K pieces of fourth information.

In a possible implementation, the transceiver unit 802 is further configured to send sixth information, where the sixth information indicates a loss and/or a gradient obtained by processing the second submodel by using first local data of the first node.

In a possible implementation, the transceiver unit 802 is further configured to send or receive first downlink control information DCI and second DCI, where the first DCI indicates a resource for carrying the first information, and the second DCI indicates a resource for carrying the second information; and

the first DCI and the second DCI each include a learning phase indication field, and a value of the learning phase indication field in the first DCI is different from a value of the learning phase indication field in the second DCI.

In a possible implementation, the first local data is query set data, and the second local data is support set data.

In a possible implementation, the fused parameter includes a fused gradient and/or a fused loss.

In a possible implementation, the parameter of the updated first submodel includes a model parameter and/or a gradient parameter.

In a possible implementation, when the apparatus 800 is configured to perform the method performed by the second node in any one of the foregoing embodiments, the apparatus 800 includes a processing unit 801 and a transceiver unit 802. The processing unit 801 is configured to determine first information, where the first information is used to determine a fused parameter obtained by separately processing a first submodel by using first local data of N second nodes, N is a positive integer, the first submodel is included in a learning model, and the learning model further includes a second submodel. The transceiver unit 802 is configured to send the first information. The transceiver unit 802 is further configured to receive second information, where the second information indicates a parameter of an updated first submodel, the updated first submodel is obtained by processing the first submodel based on the fused parameter and second local data of a first node, and the parameter of the updated first submodel is used to determine an updated learning model.

In a possible implementation, the first information includes the fused parameter.

In a possible implementation, the transceiver unit 802 is further configured to send third information, where the third information indicates a parameter of the updated learning model.

In a possible implementation, the first information includes one or more of N pieces of sub-information, and the N pieces of sub-information respectively indicate parameters obtained by processing the first submodel by using the first local data of the N second nodes.

In a possible implementation, the transceiver unit 802 is further configured to send fourth information, where the fourth information indicates a parameter of an updated second submodel, and the parameter of the updated second submodel is used to determine the updated learning model.

In a possible implementation, the transceiver unit 802 is further configured to receive fifth information, where the fifth information indicates a fusion result obtained based on the K pieces of fourth information, and K is an integer greater than 1.

In a possible implementation, the transceiver unit 802 is further configured to receive sixth information, where the sixth information indicates a loss and/or a gradient obtained by processing the second submodel by using first local data of the first node.

In a possible implementation, the transceiver unit 802 is further configured to send or receive first downlink control information DCI and second DCI, where the first DCI indicates a resource for carrying the first information, and the second DCI indicates a resource for carrying the second information; and the first DCI and the second DCI each include a learning phase indication field, and a value of the learning phase indication field in the first DCI is different from a value of the learning phase indication field in the second DCI.

In a possible implementation, the first local data is query set data, and the second local data is support set data.

In a possible implementation, the fused parameter includes a fused gradient and/or a fused loss.

In a possible implementation, the parameter of the updated first submodel includes a model parameter and/or a gradient parameter.

It should be noted that for details of content such as an information execution process of the unit of the communication apparatus 800, refer to the descriptions in the foregoing method embodiments of this application. Details are not described herein again.

FIG. 9 is another diagram of a structure of a communication apparatus 900 according to this application. The communication apparatus 900 includes at least an input/output interface 902. The communication apparatus 900 may be a chip or an integrated circuit.

Optionally, the communication apparatus further includes a logic circuit 901.

The transceiver unit 802 shown in FIG. 8 may be a communication interface. The communication interface may be the input/output interface 902 in FIG. 9, and the input/output interface 902 may include an input interface and an output interface. Alternatively, the communication interface may be a transceiver circuit, and the transceiver circuit may include an input interface circuit and an output interface circuit.

Optionally, the input/output interface 902 is configured to receive first information, where the first information is used to determine a fused parameter obtained by separately processing a first submodel by using first local data of N second nodes, N is a positive integer, the first submodel is included in a learning model, and the learning model further includes a second submodel. The logic circuit 901 is configured to determine second information, where the second information indicates a parameter of an updated first submodel, the updated first submodel is obtained by processing the first submodel based on the fused parameter and second local data of a first node, and the parameter of the updated first submodel is used to determine an updated learning model. The transceiver unit is further configured to send the second information.

Optionally, the logic circuit 901 is configured to determine first information, where the first information is used to determine a fused parameter obtained by separately processing a first submodel by using first local data of N second nodes, N is a positive integer, the first submodel is included in a learning model, and the learning model further includes a second submodel. The input/output interface 902 is configured to send the first information. The input/output interface 902 is configured to receive second information, where the second information indicates a parameter of an updated first submodel, the updated first submodel is obtained by processing the first submodel based on the fused parameter and second local data of a first node, and the parameter of the updated first submodel is used to determine an updated learning model.

The logic circuit 901 and the input/output interface 902 may further perform other steps performed by the first node or the second node in any embodiment, and achieve corresponding beneficial effects. Details are not described herein again.

In a possible implementation, the processing unit 801 shown in FIG. 8 may be the logic circuit 901 in FIG. 9.

Optionally, the logic circuit 901 may be a processing apparatus. A part or all of functions of the processing apparatus may be implemented by using software. A part or all of functions of the processing apparatus may be implemented by software.

Optionally, the processing apparatus may include a memory and a processor. The memory is configured to store a computer program, and the processor reads and executes the computer program stored in the memory, to perform corresponding processing and/or steps in any method embodiment.

Optionally, the processing apparatus may include only a processor. A memory configured to store a computer program is located outside the processing apparatus, and the processor is connected to the memory through a circuit/wire, to read and execute the computer program stored in the memory. The memory and the processor may be integrated together, or may be physically independent of each other.

Optionally, the processing apparatus may be one or more chips or one or more integrated circuits. For example, the processing apparatus may be one or more field-programmable gate arrays (field-programmable gate arrays, FPGAs), application-specific integrated chips (application-specific integrated circuits, ASICs), system on chips (system on chips, SoCs), central processing units (central processing units, CPUs), network processors (network processors, NPs), digital signal processing circuits (digital signal processors, DSPs), micro controller units (micro controller units, MCUs), programmable controllers (programmable logic devices, PLDs) or other integrated chips, or any combination of the foregoing chips or processors.

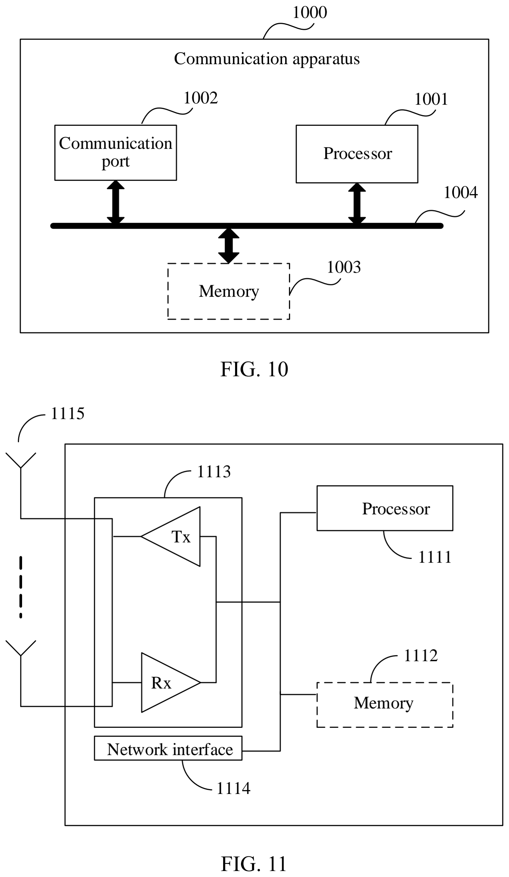

FIG. 10 shows a communication apparatus 1000 in the foregoing embodiment according to an embodiment of this application. The communication apparatus 1000 may be specifically the communication apparatus used as the terminal device in the foregoing embodiment. In the example shown in FIG. 10, the terminal device is implemented by using a terminal device (or a component in a terminal device).

In a possible diagram of a logical structure of the communication apparatus 1000, the communication apparatus 1000 may include but is not limited to at least one processor 1001 and a communication port 1002.

Further, optionally, the apparatus may further include at least one of a memory 1003 and a bus 1004. In this embodiment of this application, the at least one processor 1001 is configured to control an action of the communication apparatus 1000.

In addition, the processor 1001 may be a central processing unit, a general-purpose processor, a digital signal processor, an application-specific integrated circuit, a field-programmable gate array or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of a digital signal processor and a microprocessor. It may be clearly understood by a person skilled in the art that, for the purpose of convenient and brief description, for a detailed working process of the foregoing system, apparatus, and unit, refer to a corresponding process in the foregoing method embodiments, and details are not described herein again.

It should be noted that the communication apparatus 1000 shown in FIG. 10 may be specifically configured to implement steps implemented by the terminal device in the foregoing method embodiments, and implement technical effects corresponding to the terminal device. For a specific implementation of the communication apparatus shown in FIG. 10, refer to the descriptions in the foregoing method embodiments. Details are not described herein again.

FIG. 11 is a diagram of a structure of a communication apparatus 1100 in the foregoing embodiment according to an embodiment of this application. The communication apparatus 1100 may be specifically the communication apparatus used as the network device in the foregoing embodiment. In the example shown in FIG. 11, the network device is implemented by using a network device (or a component in a network device). For a structure of the communication apparatus, refer to the structure shown in FIG. 11.

The communication apparatus 1100 includes at least one processor 1111 and at least one network interface 1114. Further, optionally, the communication apparatus further includes at least one memory 1112, at least one transceiver 1113, and one or more antennas 1115. The processor 1111, the memory 1112, the transceiver 1113, and the network interface 1114 are connected, for example, connected through a bus. In this embodiment of this application, the connection may include various types of interfaces, transmission lines, buses, or the like. This is not limited in this embodiment. The antenna 1115 is connected to the transceiver 1113. The network interface 1114 is configured to enable the communication apparatus to communicate with another communication device through a communication link. For example, the network interface 1114 may include a network interface between the communication apparatus and a core network device, for example, an S1 interface. The network interface may include a network interface between the communication apparatus and another communication apparatus (for example, another network device or core network device), for example, an X2 or Xn interface.

The processor 1111 is mainly configured to: process a communication protocol and communication data, control the entire communication apparatus, execute a software program, and process data of the software program, for example, is configured to support the communication apparatus in performing actions described in embodiments. The communication apparatus may include a baseband processor and a central processing unit. The baseband processor is mainly configured to process the communication protocol and the communication data. The central processing unit is mainly configured to control an entire terminal device, execute the software program, and process the data of the software program. The processor 1111 in FIG. 11 may integrate functions of the baseband processor and the central processing unit. A person skilled in the art may understand that the baseband processor and the central processing unit may be processors independent of each other, and are interconnected by using a technology, for example, a bus. A person skilled in the art may understand that the terminal device may include a plurality of baseband processors to adapt to different network standards, and the terminal device may include a plurality of central processing units to enhance processing capabilities of the terminal device, and components of the terminal device may be connected by using various buses. The baseband processor may also be expressed as a baseband processing circuit or a baseband processing chip. The central processing unit may also be expressed as a central processing circuit or a central processing chip. A function of processing a communication protocol and communication data may be built in the processor, or may be stored in the memory in a form of a software program, and the processor executes the software program to implement a baseband processing function.

The memory is mainly configured to store the software program and data. The memory 1112 may exist independently, and is connected to the processor 1111. Optionally, the memory 1112 may be integrated with the processor 1111, for example, integrated into a chip. The memory 1112 can store program code for executing the technical solutions in embodiments of this application, and the processor 1111 controls the execution. Various types of executed computer program code may also be considered as a driver of the processor 1111.

FIG. 11 shows only one memory and one processor. In an actual terminal device, there may be a plurality of processors and a plurality of memories. The memory may also be referred to as a storage medium, a storage device, or the like. The memory may be a storage element on a same chip as the processor, that is, an on-chip storage element, or may be an independent storage element. This is not limited in this embodiment of this application.

The transceiver 1113 may be configured to support receiving or sending of a radio frequency signal between the communication apparatus and a terminal. The transceiver 1113 may be connected to the antenna 1115. The transceiver 1113 includes a transmitter Tx and a receiver Rx. Specifically, the one or more antennas 1115 may receive a radio frequency signal. The receiver Rx of the transceiver 1113 is configured to: receive the radio frequency signal from the antenna, convert the radio frequency signal into a digital baseband signal or a digital intermediate frequency signal, and provide the digital baseband signal or the digital intermediate frequency signal to the processor 1111, so that the processor 1111 performs further processing, for example, demodulation and decoding, on the digital baseband signal or the digital intermediate frequency signal. In addition, the transmitter Tx of the transceiver 1113 is further configured to: receive a modulated digital baseband signal or digital intermediate frequency signal from the processor 1111, convert the modulated digital baseband signal or digital intermediate frequency signal into a radio frequency signal, and send the radio frequency signal through the one or more antennas 1115. Specifically, the receiver Rx may selectively perform one-level or multi-level down mixing processing and analog-to-digital conversion processing on the radio frequency signal, to obtain a digital baseband signal or a digital intermediate frequency signal. A sequence of the down mixing processing and the analog-to-digital conversion processing is adjustable. The transmitter Tx may selectively perform one-level or multi-level up frequency mixing processing and digital-to-analog conversion on the modulated digital baseband signal or digital intermediate frequency signal, to obtain the radio frequency signal. A sequence of the up frequency mixing processing and the digital-to-analog conversion is adjustable. The digital baseband signal and the digital intermediate frequency signal may be collectively referred to as a digital signal.

The transceiver 1113 may also be referred to as a transceiver unit, a transceiver machine, a transceiver apparatus, or the like. Optionally, a component that is in the transceiver unit and that is configured to implement a receiving function may be considered as a receiving unit, and a component that is in the transceiver unit and that is configured to implement a sending function may be considered as a sending unit. That is, the transceiver unit includes the receiving unit and the sending unit. The receiving unit may also be referred to as a receiver, an input interface, a receiver circuit, or the like. The sending unit may be referred to as a transmitter machine, a transmitter, a transmitter circuit, or the like.

It should be noted that the communication apparatus 1100 shown in FIG. 11 may be specifically configured to: implement steps implemented by the network device in the foregoing method embodiments, and implement technical effects corresponding to the network device. For a specific implementation of the communication apparatus 1100 shown in FIG. 11, refer to the descriptions in the foregoing method embodiments. Details are not described herein again.

An embodiment of this application further provides a computer-readable storage medium. The storage medium is configured to store one or more computer-executable instructions. When the computer-executable instructions are executed by a processor, the processor performs the method in the possible implementations of the first node or the second node in the foregoing embodiments.

An embodiment of this application further provides a computer program product (or referred to as a computer program). When the computer program product is executed by a processor, the processor performs the method in the possible implementations of the first node or the second node.

An embodiment of this application further provides a chip system. The chip system includes at least one processor, configured to support a communication apparatus in implementing a function in the possible implementations of the communication apparatus. Optionally, the chip system further includes an interface circuit, and the interface circuit provides program instructions and/or data for the at least one processor. In a possible design, the chip system may further include a memory. The memory is configured to store program instructions and data that are necessary for the communication apparatus. The chip system may include a chip, or may include a chip and another discrete component. The communication apparatus may be specifically the first node or the second node in the foregoing method embodiments.

An embodiment of this application further provides a communication system. The network system architecture includes the first node and the second node in any one of the foregoing embodiments. The first node may be a terminal device or a network device, and the second node may also be a terminal device or a network device.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit. When the integrated unit is implemented in the form of the software functional unit and sold or used as an independent product, the integrated unit may be stored in a computer-readable storage medium. Based on such an understanding, the technical solutions of this application essentially, or the part making contribution, or all or some of the technical solutions may be implemented in a form of software product. The computer software product is stored in a storage medium and includes several instructions for instructing a computer device (which may be a personal computer, a server, a network device, or the like) to perform all or some of the steps of the methods described in embodiments of this application. The storage medium includes any medium that can store program code, such as a USB flash drive, a removable hard disk, a read-only memory (ROM, Read-Only Memory), a random access memory (RAM, Random Access Memory), a magnetic disk, or an optical disc.

## Claims

1. A communication method, comprising:

   receiving first information, wherein the first information is used to determine a fused parameter obtained by separately processing a first submodel by using first local data of N second nodes, N is a positive integer, the first submodel is comprised in a learning model, and the learning model further comprises a second submodel; and
   sending second information, wherein the second information indicates a parameter of an updated first submodel, the updated first submodel is obtained by processing the first submodel based on the fused parameter and second local data of a first node, and the parameter of the updated first submodel is used to determine an updated learning model.

2. The method according to claim 1, wherein the first information comprises the fused parameter.

3. The method according to claim 2, wherein the method further comprises:
   receiving third information, wherein the third information indicates a parameter of the updated learning model.

4. The method according to claim 1, wherein the first information comprises N pieces of sub-information, the N pieces of sub-information are respectively from the N second nodes, and the N pieces of sub-information respectively indicate parameters obtained by processing the first submodel by using the first local data of the N second nodes.

5. The method according to claim 4, wherein the method further comprises:
   receiving K pieces of fourth information, wherein the fourth information indicates a parameter of an updated second submodel, K is an integer greater than or equal to 1, and the parameter of the updated second submodel is used to determine the updated learning model.

6. The method according to claim 5, wherein K is an integer greater than 1, and the method further comprises:
   sending fifth information, wherein the fifth information indicates a fusion result obtained based on the K pieces of fourth information.

7. The method according to any one of claims 1 to 6, wherein the method further comprises:
   sending sixth information, wherein the sixth information indicates a loss and/or a gradient obtained by processing the second submodel by using first local data of the first node.

8. The method according to any one of claims 1 to 7, wherein the method further comprises:

   sending or receiving first downlink control information DCI and second DCI, wherein the first DCI indicates a resource for carrying the first information, and the second DCI indicates a resource for carrying the second information; and

the first DCI and the second DCI each comprise a learning phase indication field, and a value of the learning phase indication field in the first DCI is different from a value of the learning phase indication field in the second DCI.

9. The method according to any one of claims 1 to 8, wherein the first local data is query set data, and the second local data is support set data.

10. The method according to any one of claims 1 to 9, wherein the fused parameter comprises a fused gradient and/or a fused loss.

11. The method according to any one of claims 1 to 10, wherein the parameter of the updated first submodel comprises a model parameter and/or a gradient parameter.

12. A communication method, comprising:

   sending first information, wherein the first information is used to determine a fused parameter obtained by separately processing a first submodel by using first local data of N second nodes, N is a positive integer, the first submodel is comprised in a learning model, and the learning model further comprises a second submodel; and receiving second information, wherein the second information indicates a parameter of an updated first submodel, the updated first submodel is obtained by processing the first submodel based on the fused parameter and second local data of a first node, and the parameter of the updated first submodel is used to determine an updated learning model.

13. The method according to claim 12, wherein the first information comprises the fused parameter.

14. The method according to claim 13, wherein the method further comprises:
   sending third information, wherein the third information indicates a parameter of the updated learning model.

15. The method according to claim 12, wherein the first information comprises one or more of N pieces of sub-information, and the N pieces of sub-information respectively indicate parameters obtained by processing the first submodel by using the first local data of the N second nodes.

16. The method according to claim 15, wherein the method further comprises:
   sending fourth information, wherein the fourth information indicates a parameter of an updated second submodel, and the parameter of the updated second submodel is used to determine the updated learning model.

17. The method according to claim 16, wherein the method further comprises:
   receiving fifth information, wherein the fifth information indicates a fusion result obtained based on the K pieces of fourth information, and K is an integer greater than 1.

18. The method according to any one of claims 12 to 17, wherein the method further comprises:
   receiving sixth information, wherein the sixth information indicates a loss and/or a gradient obtained by processing the second submodel by using first local data of the first node.

19. The method according to any one of claims 12 to 18, wherein the method further comprises:

   sending or receiving first downlink control information DCI and second DCI, wherein the first DCI indicates a resource for carrying the first information, and the second DCI indicates a resource for carrying the second information; and
   the first DCI and the second DCI each comprise a learning phase indication field, and a value of the learning phase indication field in the first DCI is different from a value of the learning phase indication field in the second DCI.

20. The method according to any one of claims 12 to 19, wherein the first local data is query set data, and the second local data is support set data.

21. The method according to any one of claims 12 to 20, wherein the fused parameter comprises a fused gradient and/or a fused loss.

22. The method according to any one of claims 12 to 21, wherein the parameter of the updated first submodel comprises a model parameter and/or a gradient parameter.

23. A communication apparatus, comprising a transceiver unit and a processing unit, wherein

the transceiver unit is configured to receive first information, wherein the first information is used to determine a fused parameter obtained by separately processing a first submodel by using first local data of N second nodes, N is a positive integer, the first submodel is comprised in a learning model, and the learning model further comprises a second submodel;
the processing unit is configured to determine second information, wherein the second information indicates a parameter of an updated first submodel, the updated first submodel is obtained by processing the first submodel based on the fused parameter and second local data of a first node, and the parameter of the updated first submodel is used to determine an updated learning model; and
the transceiver unit is further configured to send the second information.

24. The apparatus according to claim 23, wherein the first information comprises the fused parameter.

25. The apparatus according to claim 24, wherein the transceiver unit is further configured to receive third information, wherein the third information indicates a parameter of the updated learning model.

26. The apparatus according to claim 23, wherein the first information comprises N pieces of sub-information, the N pieces of sub-information are respectively from the N second nodes, and the N pieces of sub-information respectively indicate parameters obtained by processing the first submodel by using the first local data of the N second nodes.

27. The apparatus according to claim 26, wherein the transceiver unit is further configured to receive K pieces of fourth information, wherein the fourth information indicates a parameter of an updated second submodel, K is an integer greater than or equal to 1, and the parameter of the updated second submodel is used to determine the updated learning model.

28. The apparatus according to claim 27, wherein K is an integer greater than 1, and the transceiver unit is further configured to send fifth information, wherein the fifth information indicates a fusion result obtained based on the K pieces of fourth information.

29. The apparatus according to any one of claims 23 to 28, wherein the transceiver unit is further configured to send sixth information, wherein the sixth information indicates a loss and/or a gradient obtained by processing the second submodel by using first local data of the first node.

30. The apparatus according to any one of claims 23 to 29, wherein the transceiver unit is further configured to send or receive first downlink control information DCI and second DCI, wherein the first DCI indicates a resource for carrying the first information, and the second DCI indicates a resource for carrying the second information; and
the first DCI and the second DCI each comprise a learning phase indication field, and a value of the learning phase indication field in the first DCI is different from a value of the learning phase indication field in the second DCI.

31. The apparatus according to any one of claims 23 to 30, wherein the first local data is query set data, and the second local data is support set data.

32. The apparatus according to any one of claims 23 to 31, wherein the fused parameter comprises a fused gradient and/or a fused loss.

33. The apparatus according to any one of claims 23 to 32, wherein the parameter of the updated first submodel comprises a model parameter and/or a gradient parameter.

34. A communication apparatus, comprising a transceiver unit and a processing unit, wherein

the processing unit is configured to determine first information, wherein the first information is used to determine a fused parameter obtained by separately processing a first submodel by using first local data of N second nodes, N is a positive integer, the first submodel is comprised in a learning model, and the learning model further comprises a second submodel;
the transceiver unit is configured to send the first information; and

the transceiver unit is further configured to receive second information, wherein the second information indicates a parameter of an updated first submodel, the updated first submodel is obtained by processing the first submodel based on the fused parameter and second local data of a first node, and the parameter of the updated first submodel is used to determine an updated learning model.

35. The apparatus according to claim 34, wherein the first information comprises the fused parameter.

36. The apparatus according to claim 35, wherein the transceiver unit is further configured to send third information, wherein the third information indicates a parameter of the updated learning model.

37. The apparatus according to claim 34, wherein the first information comprises one or more of N pieces of sub-information, and the N pieces of sub-information respectively indicate parameters obtained by processing the first submodel by using the first local data of the N second nodes.

38. The apparatus according to claim 37, wherein the transceiver unit is further configured to send fourth information, wherein the fourth information indicates a parameter of an updated second submodel, and the parameter of the updated second submodel is used to determine the updated learning model.

39. The apparatus according to claim 38, wherein the transceiver unit is further configured to receive fifth information, wherein the fifth information indicates a fusion result obtained based on the K pieces of fourth information, and K is an integer greater than 1.

40. The apparatus according to any one of claims 34 to 39, wherein the transceiver unit is further configured to receive sixth information, wherein the sixth information indicates a loss and/or a gradient obtained by processing the second submodel by using first local data of the first node.

41. The apparatus according to any one of claims 34 to 40, wherein the transceiver unit is further configured to send or receive first downlink control information DCI and second DCI, wherein the first DCI indicates a resource for carrying the first information, and the second DCI indicates a resource for carrying the second information; and
the first DCI and the second DCI each comprise a learning phase indication field, and a value of the learning phase indication field in the first DCI is different from a value of the learning phase indication field in the second DCI.

42. The apparatus according to any one of claims 34 to 41, wherein the first local data is query set data, and the second local data is support set data.

43. The apparatus according to any one of claims 34 to 42, wherein the fused parameter comprises a fused gradient and/or a fused loss.

44. The apparatus according to any one of claims 34 to 43, wherein the parameter of the updated first submodel comprises a model parameter and/or a gradient parameter.

45. A communication apparatus, comprising at least one processor, wherein the at least one processor is coupled to a memory, and the at least one processor is configured to perform the method according to any one of claims 1 to 11.

46. The communication apparatus according to claim 45, wherein the communication apparatus is a chip or a chip system.

47. A communication apparatus, comprising at least one processor, wherein the at least one processor is coupled to a memory; and
the at least one processor is configured to perform the method according to any one of claims 12 to 22.

48. The communication apparatus according to claim 47, wherein the communication apparatus is a chip or a chip system.

49. A communication system, wherein the system comprises the communication apparatus according to any one of claims 23 to 33 and the communication apparatus according to any one of claims 34 to 44; or
the system comprises the communication apparatus according to claim 45 and the communication apparatus according to claim 46.

50. A computer-readable storage medium, wherein the medium stores instructions, and when the instructions are executed by a computer, the method according to any one of claims 1 to 22 is implemented.

51. A computer program product, comprising instructions, wherein when the instructions are run on a computer, the computer is caused to perform the method according to any one of claims 1 to 22.

FIG. 1a

FIG. 1b

Television

Mobile
phone

FIG. 1c

Input layer          Hidden layer          Output layer

b

w

$x_1$

$x_2$

$x_3$

$x_4$

$y_1$

$y_2$

$y_3$

$y_4$

$y_5$

$y_6$

FIG. 2a

FIG. 2b

FIG. 2c

Central node

$G_n$

$W$

$G_k$

$W$

$G_m$

$W$

Distributed node $n$

Distributed node $k$

Distributed node $m$

FIG. 2d

$\nabla f_i(x)$

$\nabla f_i(x)$

FIG. 2e

a          b          c          d

FIG. 2f

a          b          c          d

FIG. 2g

FIG. 3

FIG. 4

FIG. 5

FIG. 6

First node

Second node

S701a: First information

S701b: Sixth information

S702a: Second information

S702b: Fourth information

S703: Fifth information

FIG. 7

800

Communication apparatus

801

Processing unit

802

Transceiver unit

FIG. 8

900

Communication apparatus

901

Logic circuit

902

Input/Output interface

FIG. 9

1000

Communication apparatus

1002

Communication port

1001

Processor

1004

1003

Memory

FIG. 10

1115

1113

Tx

Processor

1111

Rx

1112

Memory

Network interface

1114

FIG. 11

## INTERNATIONAL SEARCH REPORT

| | International application No. |
|---|---|
| | **PCT/CN2023/108655** |

**A. CLASSIFICATION OF SUBJECT MATTER**

G06N20/00(2019.01)i; H04W 24/02(2009.01)i

According to International Patent Classification (IPC) or to both national classification and IPC

**B. FIELDS SEARCHED**

Minimum documentation searched (classification system followed by classification symbols)

IPC:G06N,H04W

Documentation searched other than minimum documentation to the extent that such documents are included in the fields searched

Electronic data base consulted during the international search (name of data base and, where practicable, search terms used)

CNABS, CNTXT, VEN, USTXT, WOTXT, EPTXT, CNKI, IEEE, 3GPP: 联邦, 学习, 本地数据, 子模型, 融合, 聚合, 梯度, 损失函数, 查询集, 支撑集, 公共数据集, FL, federated learning, learning, fusion parameters , DCI, gradient, Loss function

**C. DOCUMENTS CONSIDERED TO BE RELEVANT**

| Category* | Citation of document, with indication, where appropriate, of the relevant passages | Relevant to claim No. |
|---|---|---|
| X | WO 2022222110 A1 (GUANGDONG OPPO MOBILE TELECOMMUNICATIONS CORP., LTD.) 27 October 2022 (2022-10-27) description, paragraphs [0080]-[0156] and [0390]-[0398], and figures 5-19 | 1-51 |
| A | CN 115186833 A (ALIBABA (CHINA) CO., LTD.) 14 October 2022 (2022-10-14) entire document | 1-51 |
| A | WO 2023065972 A1 (HUAWEI TECHNOLOGIES CO., LTD.) 27 April 2023 (2023-04-27) entire document | 1-51 |
| A | WO 2023083312 A1 (HUAWEI TECHNOLOGIES CO., LTD.) 19 May 2023 (2023-05-19) entire document | 1-51 |
| A | WO 2023097522 A1 (GUANGDONG OPPO MOBILE TELECOMMUNICATIONS CORP., LTD.) 08 June 2023 (2023-06-08) entire document | 1-51 |

☐ Further documents are listed in the continuation of Box C. ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **12 January 2024** | **24 January 2024** |

| Name and mailing address of the ISA/CN | Authorized officer |
|---|---|
| **China National Intellectual Property Administration (ISA/ CN) China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
| PCT/CN2023/108655 |

| Patent document cited in search report | | | Publication date (day/month/year) | Patent family member(s) | | | Publication date (day/month/year) |
|---|---|---|---|---|---|---|---|
| WO | 2022222110 | A1 | 27 October 2022 | None | | | |
| CN | 115186833 | A | 14 October 2022 | None | | | |
| WO | 2023065972 | A1 | 27 April 2023 | CN | 116010072 | A | 25 April 2023 |
| WO | 2023083312 | A1 | 19 May 2023 | CN | 116150612 | A | 23 May 2023 |
| WO | 2023097522 | A1 | 08 June 2023 | None | | | |

Form PCT/ISA/210 (patent family annex) (July 2022)